# EUROPEAN PATENT SPECIFICATION

(11) **EP 2 590 131 B1**
(45) Date of publication and mention of the grant of the patent: **14.09.2016**
(21) Application number: 12816223.7
(22) Date of filing: 08.06.2012
(51) Int. Cl.: G06Q 30/02, G06Q 30/06

(54) **AFFILIATE MANAGEMENT DEVICE**
FILIALENVERWALTUNGSVORRICHTUNG
DISPOSITIF DE GESTION D'AFFILIÉS

(30) Priority: 25.07.2011 JP 2011162421
(43) Date of publication of application: 08.05.2013
(73) Proprietor: Rakuten, Inc., Tokyo 158-0094 (JP)
(72) Inventor: KASAI, Akira, Tokyo 140-0002 (JP); BABA, Takeshi, Tokyo 140-0002 (JP)
(74) Representative: Price, Christopher
(86) International application number: PCT/JP2012/064820
(87) International publication number: WO 2013/015028

(56) References cited:
- JP-A- 2002 024 687
- JP-A- 2002 117 318
- JP-A- 2003 288 530
- JP-A- 2007 286 769
- JP-A- 2009 003 841
- JP-A- 2009 020 838
- JP-A- 2009 058 988
- JP-A- 2011 134 251
- US-A- 6 029 141
- US-A1- 2006 080 239
- US-A1- 2009 171 755
- US-A1- 2011 055 021
- MIODRAG IVKOVIC ET AL: "Affiliate internet marketing: Concept and application analysis", EDUCATION AND MANAGEMENT TECHNOLOGY (ICEMT), 2010 INTERNATIONAL CONFERENCE ON, IEEE, PISCATAWAY, NJ, USA, 2 November 2010 (2010-11-02), pages 319-323, XP031817983, ISBN: 978-1-4244-8616-8
- A Barth: "RFC 6265 - HTTP State Management Mechanism", , 1 April 2011 (2011-04-01), XP055108620, Retrieved from the Internet: URL:http://tools.ietf.org/html/rfc6265#pag e-25 [retrieved on 2014-03-18]

## Description

### Technical Field

One aspect of the present invention relates to an affiliate management device, an affiliate management method, an affiliate management program, and a computer-readable recording medium storing the program.

### Background Art

Affiliate advertising has been known. Affiliate advertising is a mechanism in which, when a viewer clicks on an affiliate link on a website and purchases an item from a linked shop, a reward is paid to a publisher who put the affiliate link. For example, PTL 1 discloses an affiliate advertising management device including a sales condition management unit that manages the details of items and services and reward conditions and a reward information management unit that manages the details of business transactions reported by sellers and purchasers and the reward amount to be paid to introducers and the dividend amount to be paid to purchasers.

PTL 2 discloses widgets added to web pages which report user generated events to a content provider system. The system collects clickstream data, for example using HTTP cookies, and retrospectively analyses events to detect associations between websites. It may also implement a referral programme, for example, when it is determined from analysis of the clickstream data that a widget-displayed link to site B was displayed and clicked on at site A, it may charge B a fee and credit some or all of it to A, which may be contingent on a purchase at site B.

NPL 1 is an Internet Standards Document defining HTTP cookie and Set-Cookie header fields, and includes various information regarding use of HTTP cookies.

### Citation List

### Patent Literature

PTL 1: JP 2006-190099
PTL 2: US 2009/0171755

### Non-Patent Literature

NPL 1: A Barth: "RFC 6265 - HTTP State Management Mechanism", 1 April 2011, XP055108620

### Summary of Invention

### Technical Problem

However, when the affiliate is applied to a service involving a plurality of shops (for example, a virtual shopping mall), there is an inappropriate relationship between affiliate fee payment and receipt in some cases. For example, it is assumed that, when a user clicks on an affiliate link to a shop A and accesses a webpage of the shop A and then accesses a webpage of a shop B and purchases an item from the shop B, the shop B pays an affiliate fee to a publisher of the affiliate link to the shop A. In this case, if an affiliate rate differs between shops, a case can occur where a selling shop pays an excessive amount of affiliate fee or an advertisement publisher receives a lower amount of affiliate fee than the amount which should be received.

Therefore, a mechanism of affiliate advertising is demanded that can bring a certain satisfaction to both a shop to pay an affiliate fee and an advertisement publisher to receive the affiliate fee.

### Solution to Problem

An affiliate management device, affiliate management method affiliate management program and computer-readable medium storing an affiliate management program are provided in accordance with the appended claims.

### Advantageous Effects of Invention

According to one aspect of the present invention, it is possible to bring a certain satisfaction to both a shop to pay an affiliate fee and an advertisement publisher to receive the affiliate fee.

### Brief Description of Drawings

Fig. 1 is a diagram showing an overall configuration of an EC system according to an embodiment.
Fig. 2 is a diagram showing an example of rate information.
Fig. 3 is a diagram showing an example of click information.
Fig. 4 is a diagram showing an example of affiliate information.
Fig. 5 is a diagram showing a hardware configuration of an affiliate server shown in Fig. 1.
Fig. 6 is a diagram showing a functional configuration of the affiliate server shown in Fig. 1.
Fig. 7 is a diagram showing a determination process related to an affiliate fee (example 1).
Fig. 8 is a diagram showing a determination process related to an affiliate fee (example 2).
Fig. 9 is a diagram showing a determination process related to an affiliate fee (example 3).
Fig. 10 is a diagram showing a determination process related to an affiliate fee (example 4).
Fig. 11 is a diagram showing a determination process related to an affiliate fee (example 4-2).
Fig. 12 is a diagram showing a determination process related to an affiliate fee (example 5).
Fig. 13 is a diagram showing a determination process related to an affiliate fee (example 6).
Fig. 14 is a diagram showing a determination process related to an affiliate fee (example 7).
Fig. 15 is a diagram showing a determination process related to an affiliate fee (example 8).
Fig. 16 is a diagram showing a determination process related to an affiliate fee (example 9).
Fig. 17 is a diagram showing a determination process related to an affiliate fee (example 10).
Fig. 18 is a diagram showing a determination process related to an affiliate fee (example 11).
Fig. 19 is a sequence chart showing an operation of the EC system shown in Fig. 1.
Fig. 20 is a flowchart showing details of a click information storage process in Fig. 19.
Fig. 21 is a flowchart showing details of an affiliate-related process shown in Fig. 19.
Fig. 22 is a diagram showing a structure of an affiliate management program according to an embodiment.

### Description of Embodiments

An embodiment of the present invention is described hereinafter in detail with reference to the appended drawings. In the description of the drawings, the same or equivalent elements are denoted by the same reference symbols, and the redundant explanation thereof is omitted.

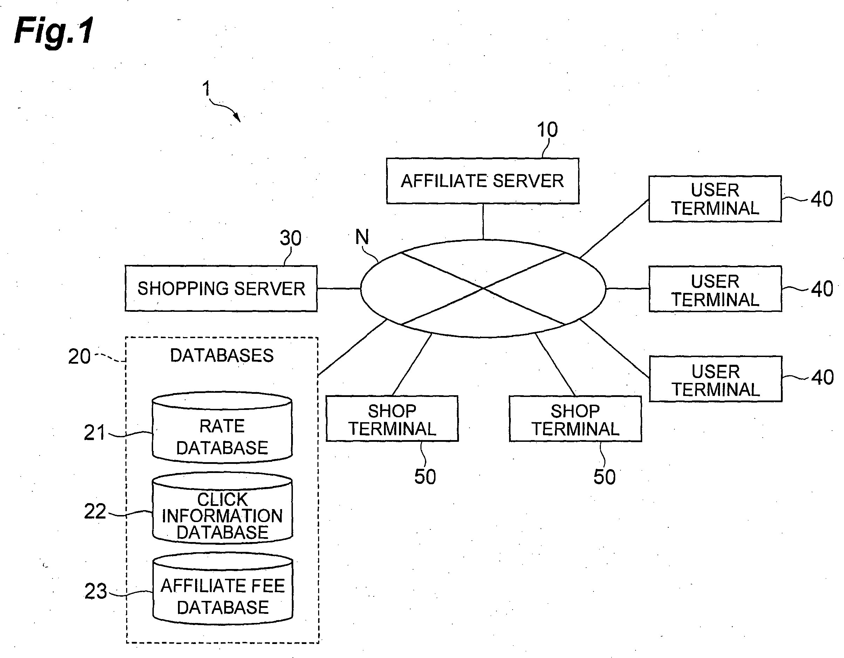

The function and configuration of an affiliate server (affiliate management device) 10 according to an embodiment are described hereinafter with reference to Figs. 1 to 17. The affiliate server 10 is a computer that manages processing related to affiliate advertising, particularly payment of an affiliate fee, in an electronic commerce system (which is referred to hereinafter as "EC system") 1.

The EC system 1 includes, in addition to the affiliate server 10, databases 20, a shopping server 30, a plurality of user terminals 40, and a plurality of shop terminals 50. The affiliate server 10 can communicate with the databases 20, the shopping server 30 and the user terminals 40 through a communication network N which is the Internet, a leased line or the like.

In the EC system 1, a website (EC site) of a virtual shopping mall is provided to a user by the shopping server 30. A plurality of shops (member shops of the virtual shopping mall) are present in the EC site. A staff of each shop registers items of their shop through the shop terminal 50, and thereby various items from various shops are uploaded onto the EC site. A user can directly access the EC site using their user terminal 40 and purchase a desired item.

Further, a user can click on an affiliate link placed (displayed) on an arbitrary website such as another person's blog site and thereby access a webpage of a specific shop or a webpage of a specific item of the shop in the EC site and purchase a desired item. An affiliate link is displayed as a banner advertisement, for example. When a user accesses the EC site through an affiliate link and purchases an item from a shop in that EC site, a certain reward is paid from a selling shop of the item to an advertisement publisher (link publisher) who places the affiliate link on the website.

The databases 20 are a set of one or more databases that store various data required for processing in the EC system 1. The databases 20 include various known databases such as an item database that stores item information, a user database that stores user information, and a purchase database that stores purchase information. In addition, the databases 20 include databases specific to this embodiment such as a rate database 21, a click information database 22, and an affiliate fee database 23.

The rate database 21 is a means of storing rate information indicating the rate of each shop used for calculation of an affiliate fee. The rate of each shop is determined by a contract between an administrator of the EC system 1 and each shop, and rate information is set in advance based on the contract. In the rate information, each shop is associated with three types of rates: a normal rate, a new advance rate and an old advance rate.

In the rate information, information about a shop is indicated by a pattern (affiliate pattern) related to payment of an affiliate fee and an identifier (shop ID) that identifies the shop. In this embodiment, shops in the EC site are classified into three different affiliate patterns: "normal shop", "old advance shop" and "new advance shop". The normal shop is a pattern that is set as an initial value at the time when a shop becomes a member of the EC site, which is a shop that is not the old advance shop or the new advance shop. The old advance shop and the new advance shop are shops that have a contract to pay an affiliate fee to an advertisement publisher at a higher rate than the normal shop for the purpose of sales promotion.

The normal shop and the old advance shop (type 1 shop) pay an affiliate fee under specified conditions to a publisher of the affiliate link that has been clicked on last when an item of its shop is purchased. On the other hand, the new advance shop (type 2 shop) pays an affiliate fee under specified conditions not only to a publisher of the affiliate link that has been clicked on last but also a publisher of the affiliate link that has been clicked on before that when an item of its shop is purchased.

The normal rate and the old advance rate (type 1 rate) are used when calculating an affiliate fee to be paid to a publisher of the affiliate link clicked on last. On the other hand, the new advance rate (type 2 rate) is used when calculating an affiliate fee to be paid to a publisher of the affiliate link clicked on last or the affiliate link clicked on before that. The normal rate is set for all shops regardless of affiliate pattern. On the other hand, the old advance rate is set only for old advance shops, and the new advance rate is set only for new advance shops.

As is described in detail later, the pattern called the new advance shop is introduced in order to realize more satisfactory (affiliate fee payment than the normal shop and the old advance shop for both of a shop which is a payer of an affiliate fee and an advertisement publisher which is a payee of the affiliate fee. An affiliate fee payment rule of the new advance shop is set so as to promote a shift from the normal shop and the old advance shop to the new advance shop.

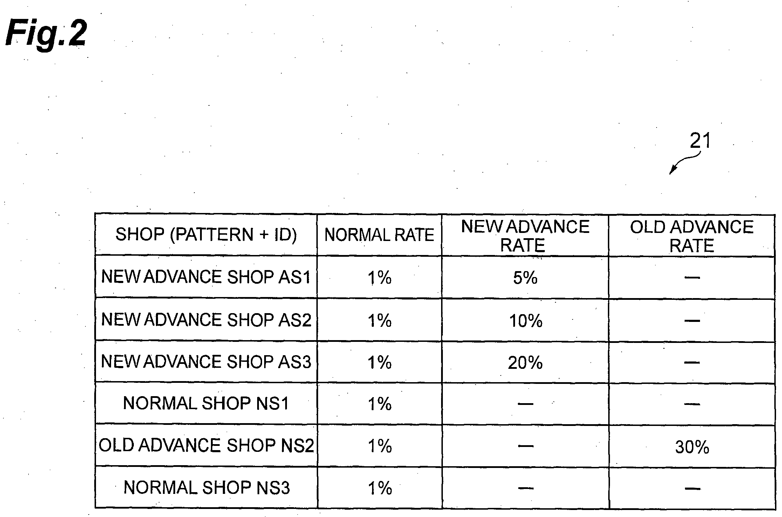

Fig. 2 shows an example of the rate information. Although the normal rate is the same across shops in the example of Fig. 2, the normal rate may be different among shops. The new advance rate and the old advance rate may be also different or common among shops.

The click information database 22 is a means (storage unit) of storing click information, and it is composed of a table for the normal shop and the old advance shop (old table) and a table for the new advance shop (new table). Note that, however, the click information database 22 may be composed of one table combining the old table and the new table.

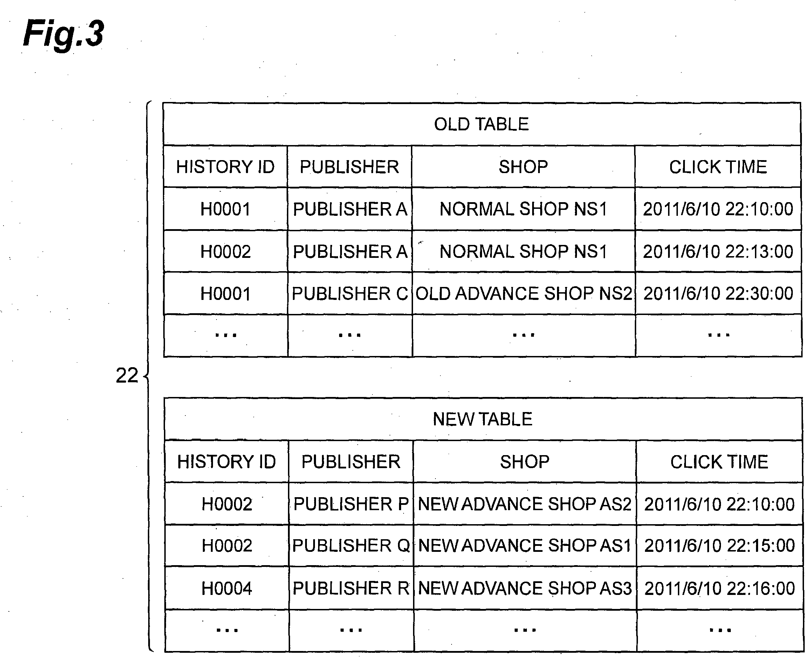

In the click information, a history ID that identifies a user who has clicked on an affiliate link or a browser which has accepted the click, a publisher of the clicked affiliate link, a linked shop from the affiliate link, and a click time are associated with one another. The history ID is used for specifying a user who has clicked on an affiliate link. The structure of the click information is the same between the old table and the new table. The click information is generated by an access monitoring unit 11, which is described later, and stored into the click information database 22. The stored click information is saved for a certain period of time (for example, 30 days) and then deleted. The click information database 22 stores the click information as shown in Fig. 3, for example.

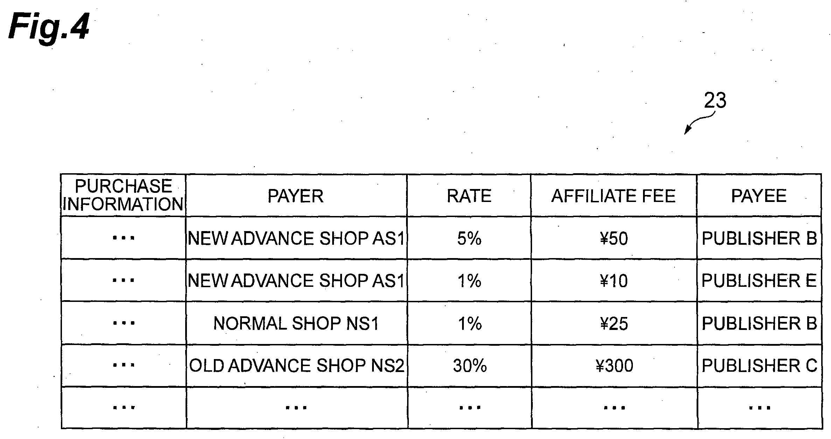

The affiliate fee database 23 is a means of storing affiliate information related to the payment of a determined affiliate fee. In the affiliate information, purchase information indicating one purchase procedure, a payer of the affiliate fee, the applied rate, the affiliate fee, and a payee of the affiliate fee are associated with one another. The purchase information includes information about a purchaser, a purchased item, a selling shop and a selling price. The affiliate information is generated by a determination unit 14, which is later, and stored into the affiliate fee database 23. The affiliate fee database 23 stores the affiliate information as shown in Fig. 4, for example.

The shopping server 30 is a computer that provides an EC site involving one or more shops to a user. Further, the shopping server 30 performs various processing based on an HTTP (Hypertext Transfer Protocol) request directly transmitted from the user terminal 40 or transferred through the affiliate server 10. For example, the shopping server 30 executes generation and transmission of various web pages (for example, an item page, an item search page, a shopping cart page, an order page and the like) and purchase processing. In this embodiment, when the shopping server 30 completes the purchase process, it transmits a purchase notification for causing the affiliate server 10 to execute an affiliate-related process to the affiliate server 10. The purchase notification contains an HTTP cookie (which is hereinafter referred to simply as a cookie) contained in the HTTP request transmitted from the user terminal 40 and the above-described purchase information. The details of the cookie are described later.

The user terminal 40 is a computer with a web browser. The user terminal 40 may be a sophisticated mobile phone (smartphone), a mobile phone, a personal digital assistant (PDA), a portable or stationary personal computer (PC) and the like, though the user terminal 40 is not limited thereto.

The user terminal 40 transmits an HTTP request to the shopping server 30 or the affiliate server 10 to request a web page or certain processing. The user terminal 40 then receives a web page transmitted from the shopping server 30 in response to the HTTP- request and displays the web page on the web browser. A user can thereby view or manipulate a desired web page.

When a user clicks on an affiliate link on the displayed web page, the user terminal 40 transmits an HTTP request containing a cookie to the affiliate server 10. The cookie is a storage unit that contains a history ID, a publisher ID that identifies a publisher of the affiliate link clicked on this time, a shop ID that identifies a linked shop from the affiliate link, and a click time. In the case where the publisher ID, the shop ID and the click time are already saved in the cookie, when a user clicks on another affiliate link, those information in the cookie are overwritten with the publisher ID, the shop ID and the click time for the affiliate link clicked on this time.

The shop terminal 50 is a computer that is setup in a member shop of the EC site. The shop terminal 50 receives an instruction for registration, overwrite, or deletion of item information input by a staff of a member shop and updates the item information of the shop stored in an item database (not shown) based on the instruction.

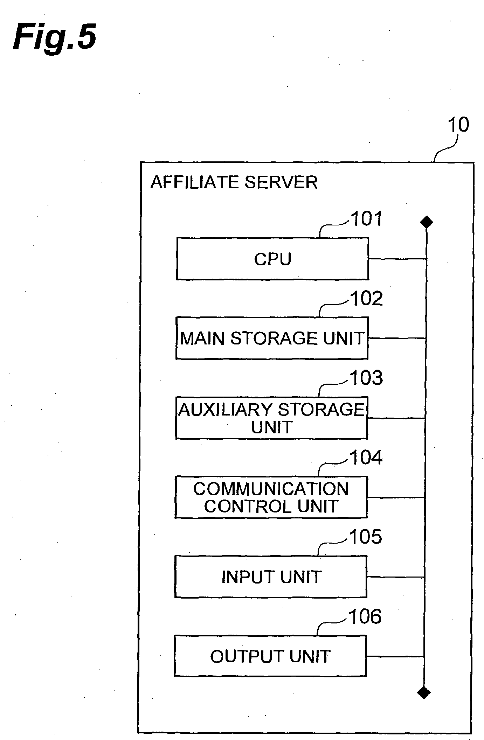

The affiliate server 10 is specifically described hereinbelow. As shown in Fig. 5, the affiliate server 10 includes a CPU 101 that executes an operating system, an application program and the like, a main storage unit 102 such as ROM and RAM, an auxiliary storage unit 103 such as a hard disk, a communication control unit 104 such as a network card, an input unit 105 such as a keyboard and a mouse, and an output unit 106 such as a monitor.

The functional components of the affiliate server 10 described later are implemented by loading given software onto the CPU 101 or the main storage unit 102, making the communication control unit 104, the input unit 105, the output unit 106 and the like operate under control of the CPU 101, and performing reading and writing of data in the main storage unit 102 or the auxiliary storage unit 103. The data and database required for processing are stored in the main storage unit 102 or the auxiliary storage unit 103. Note that, although the affiliate server 10 is composed of one computer in Fig. 5, the functions of the affiliate server 10 may be distributed among a plurality of computers.

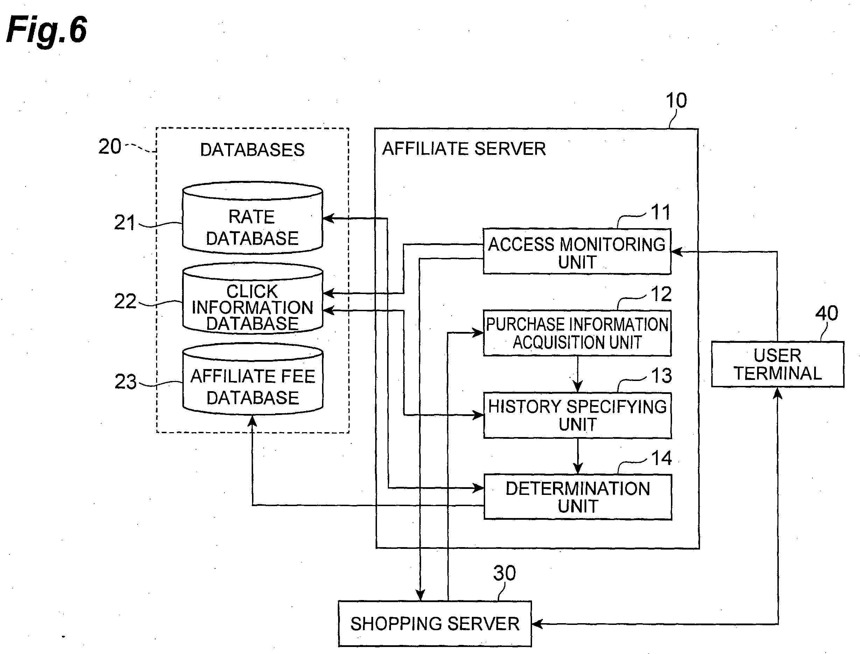

As shown in Fig. 6, on the affiliate server 10, functional components including an access monitoring unit 11, a purchase information acquisition unit 12, a history specifying unit 13, and a determination unit 14 are executed.

The access monitoring unit 11 is a means of monitoring user's access to an affiliate link by recording click information indicating the user's click on the affiliate link. The access monitoring unit 11 generates click information based on a cookie in the HTTP request received from the user terminal 40 and stores the click information into the click information database 22. The access monitoring unit 11 stores the click information into the old table when a linked shop indicated by the cookie is the normal shop or the old advance shop, and stores the click information into the new table when the linked shop is the new advance shop.

Note that, when one user clicks on the affiliate link of the same shop a plurality of times, the access monitoring unit 11 overwrites the click information in the click information database 22 which corresponds to the history ID and the shop with the click information which corresponds to the affiliate link clicked on last. This can cause a change in publisher, which means that an affiliate fee is paid to a publisher of the affiliate link clicked on last.

After recording the click information in this manner, the affiliate server transfers the processed HTTP request to the shopping server 30. In the shopping server 30, a web page (for example, item page) in accordance with the HTTP request is generated and transmitted to the user terminal 40. The web page is then displayed on the browser of the user terminal 40. A user can thereby view the web page corresponding to the clicked affiliate link.

The purchase information acquisition unit 12 is a means of receiving a purchase notification from the shopping server 30 and outputting the notification to the history specifying unit 13.

The history specifying unit 13 is a means of specifying the affiliate link click history of a purchaser based on the input purchase notification.

First, the history specifying unit 13 acquires click information (which is hereinafter referred to as "first click information") from the cookie contained in the purchase notification. The first click information is information about the affiliate link clicked on last by a purchaser (last click information). Next, the history specifying unit 13 extracts one or more click information (which is hereinafter referred to as "second click information") corresponding to the history ID of the first click information from the click information database 22. The second click information is the same information as the last click information or information about one or more affiliate links clicked on by a purchaser before the time when the affiliate link has been clicked on last (past click information). The history specifying unit 13 can thereby specify the affiliate link click history of the purchaser by acquiring those two kinds of click information.

Further, the history specifying unit 13 extracts purchase information from the purchase notification. The history specifying unit 13 then outputs the first and second click information and the purchase information to the determination unit 14.

The determination unit 14 is a means of determining an affiliate fee derived from the purchase of an item and the payee of the affiliate fee based on the click history.

First, the determination unit 14 sets a selling shop indicated by sales information as a payer and further sets a publisher of the affiliate link indicated by the first click information as a payee. The determination unit 14 then reads rate information of the selling shop from the rate database 21 and multiplies a selling price indicated by the purchase information by the normal rate indicated by the rate information and thereby obtains an affiliate fee to the publisher. This is the first stage of the determination process.

Next, the determination unit 14 determines whether there is information corresponding to the selling shop in the second click information read from the new table of the click information database. Then, only when there is the second click information corresponding to the selling shop, the determination unit 14 sets a publisher of the affiliate link indicated by the second click information as a payee and multiplies the selling price by the new advance rate indicated by the already acquired rate information and thereby obtains an affiliate fee to the publisher. This is the second stage of the determination process.

Then, the determination unit 14 generates affiliate information based on the above-described two stages of determination and stores the affiliate information into the affiliate fee database 23. After that, the determination unit 14 clears the cookie to delete the first click information and further deletes the second click information used in the second stage of the determination process from the click information database 22. The processing of the determination unit 14 is described hereinafter using specific examples. It is assumed that the purchase price is ¥1000 in all examples.

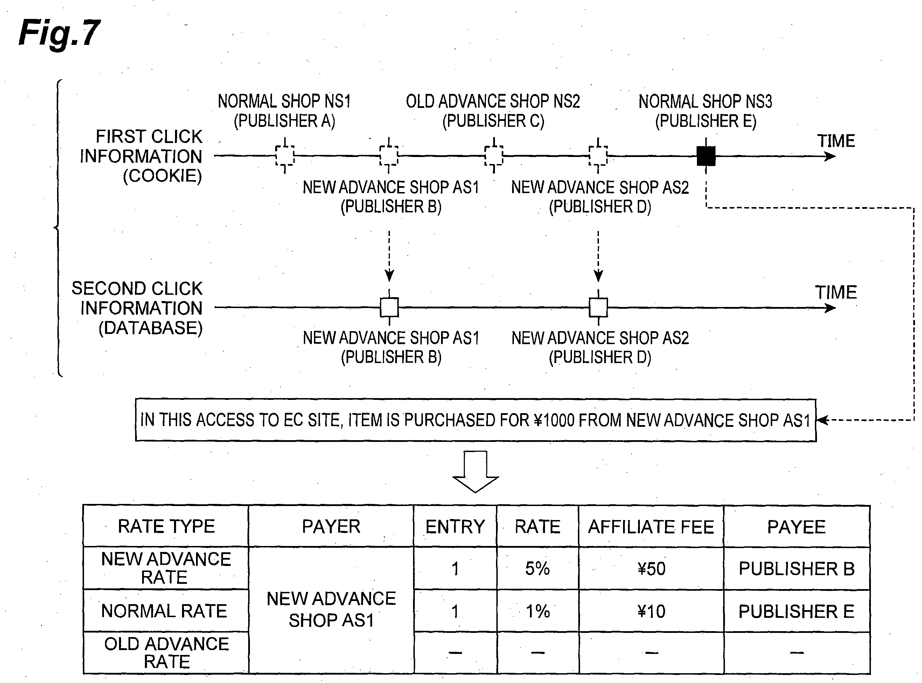

[Example 1] Example 1 is described using Fig. 7. In this example, a user purchases an item from a new advance shop indicated by the past click information, not from a shop indicated by the last click information. Such a user's operation can be specified from the sales information and the first click information (cookie).

The determination unit 14 specifies a new advance shop AS1 as a payer of the affiliate fee. The determination unit 14 then determines a payee of the affiliate fee and the rate as follows.

First, the determination unit 14 determines a publisher E of the affiliate link clicked on last as the first payee. Further, the determination unit 14 acquires the normal rate (1%) applied to the new advance shop AS1, which is a selling shop, from the rate database 21 and multiplies the selling price by the rate to thereby obtain the affiliate fee. By the above process, the determination unit 14 determines to pay ¥10 to the publisher E.

Then, the determination unit 14 determines whether the affiliate link of the selling shop has been clicked on before or not. Specifically, when the determination unit 14 acquires the second click information corresponding to the purchaser and the selling shop, it determines the publisher indicated by the second click information as another payee (second payee) of the affiliate fee. In this example, because the selling shop is the new advance shop AS1 and the second click information corresponding to this shop exists, the determination unit 14 determines the publisher B indicated by the second click information as the second payee. Further, the determination unit 14 acquires the new advance rate (5%) applied to the new advance shop AS1, which is a selling shop, from the rate database 21 and multiplies the selling price by the rate to thereby obtain the affiliate fee. By the above process, the determination unit 14 determines to pay ¥50 to the publisher B.

Therefore, in this example, the determination unit 14 determines the publisher E (¥10) and the publisher B (¥50) as the payee of the affiliate fee. Finally, the determination unit 14 clears the cookie and deletes the one second click information used in the above process from the click information database 22.

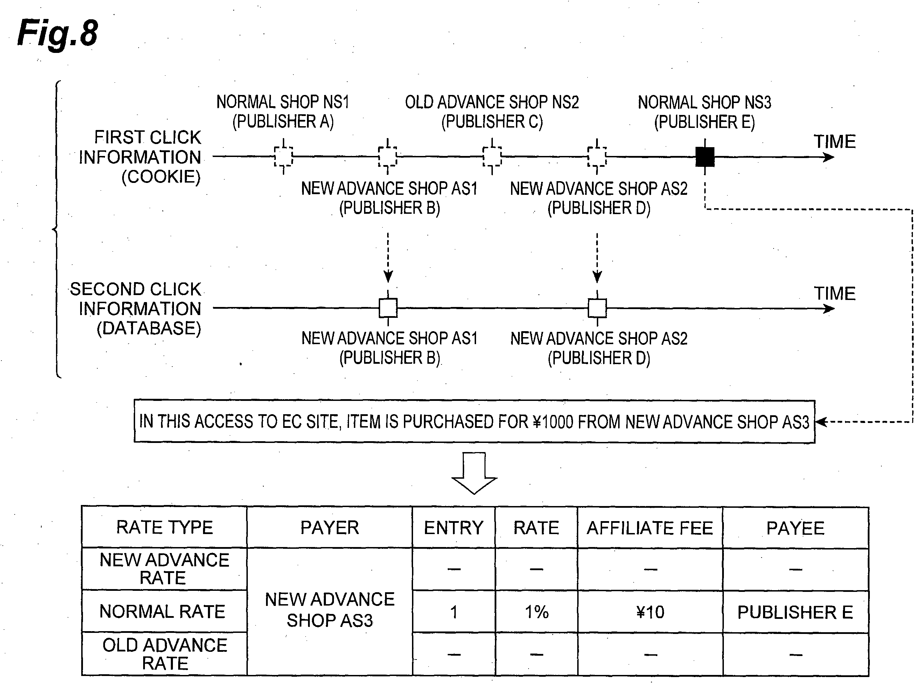

[Example 2] Example 2 is described using Fig. 8. In this example, a user purchases an item from a new advance shop that is not indicated by either of the last click information or the past click information. The determination unit 14 determines a new advance shop A3 as a payer of the affiliate fee. The determination unit 14 then determines a payee of the affiliate fee and the rate as follows.

First, the determination unit 14 determines a publisher E of the affiliate link clicked on last as the first payee. Further, the determination unit 14 acquires the normal rate (1%) applied to the new advance shop AS3, which is a selling shop, from the rate database 21 and multiplies the selling price by the rate to thereby obtain the affiliate fee. By the above process, the determination unit 14 determines to pay ¥10 to the publisher E.

Then, the determination unit 14 determines whether the affiliate link of the selling shop has been clicked on before or not. In this example, because the second click information corresponding to the new advance shop AS3 does not exist, the determination unit 14 ends the process about the second click information at this point.

Therefore, in this example, the determination unit 14 determines the publisher E (¥10) as the payee of the affiliate fee. Finally, the determination unit 14 clears the cookie.

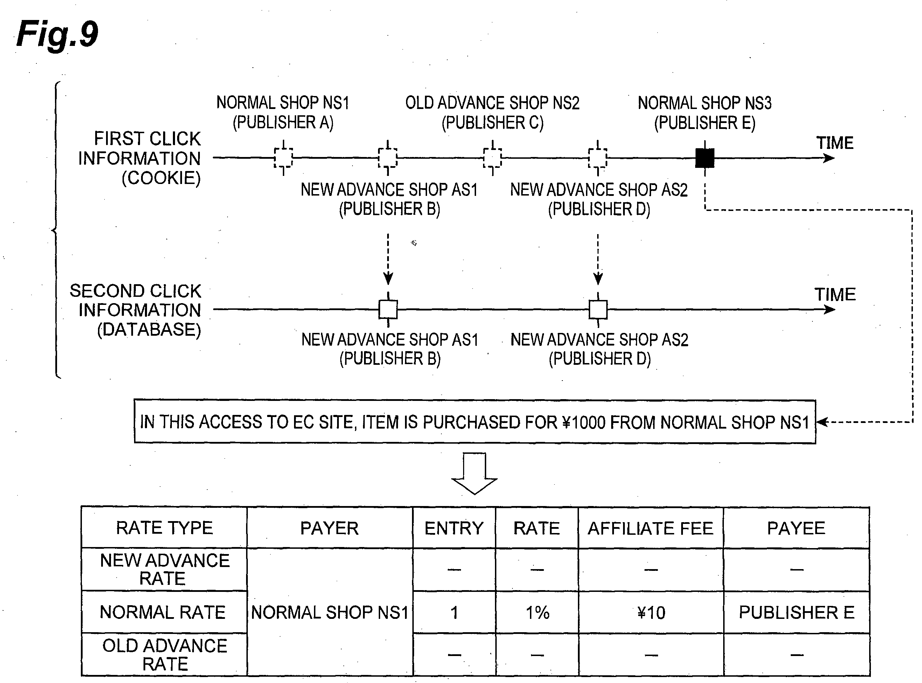

[Example 3] Example 3 is described using Fig. 9. In this example, a user purchases an item from a normal shop that is not indicated by the last click information. The determination unit 14 determines a normal shop NS1 as a payer of the affiliate fee. The determination unit 14 then determines a payee of the affiliate fee and the rate as follows.

First, the determination unit 14 determines a publisher E of the affiliate link clicked on last as the first payee. Further, the determination unit 14 acquires the normal rate (1%) applied to the normal shop NS1, which is a selling shop, from the rate database 21 and multiplies the selling price by the rate to thereby obtain the affiliate fee. By the above process, the determination unit 14 determines to pay ¥10 to the publisher E.

Because the selling shop in this example is not a new advance shop but a normal shop, the determination unit 14 does not perform the process about the second click information. Although the affiliate link to the normal shop NS1 has been clicked by the purchaser in the past, the click information indicating that click is already overwritten in the cookie and further not stored in the click information database 22, and therefore a publisher A cannot be selected as a payee of the affiliate fee.

Therefore, in this example, the determination unit 14 determines the publisher E (¥10) as the payee of the affiliate fee. Finally, the determination unit 14 clears the cookie.

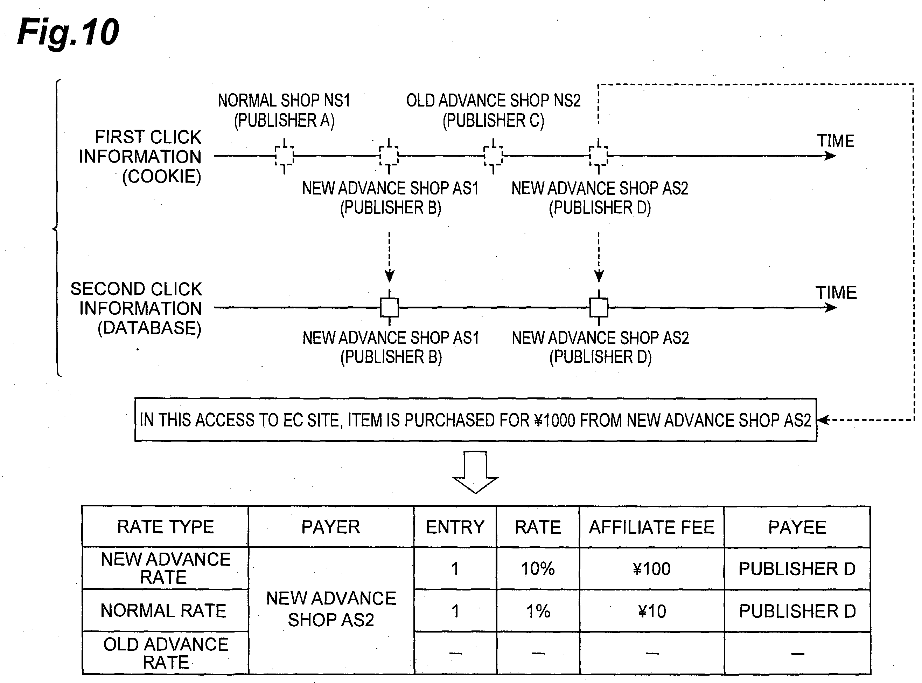

[Example 4] Example 4 is described using Fig. 10. In this example, a user purchases an item from a new advance shop that is indicated by the last click information. The determination unit 14 determines a new advance shop AS2 as a payer of the affiliate fee. The determination unit 14 then determines a payee of the affiliate fee and the rate as follows.

First, the determination unit 14 determines a publisher D of the affiliate link clicked on last as the first payee. Further, the determination unit 14 acquires the normal rate (1%) applied to the new advance shop AS2, which is a selling shop, from the rate database 21 and multiplies the selling price by the rate to thereby obtain the affiliate fee. By the above process, the determination unit 14 determines to pay ¥10 to the publisher D.

Then, the determination unit 14 determines whether the affiliate link of the selling shop has been clicked on before or not. In this example, because the second click information corresponding to the new advance shop AS2 exists, the determination unit 14 determines the publisher D indicated by the second click information as the second payee. Further, the determination unit 14 acquires the new advance rate (10%) applied to the new advance shop AS2 from the rate database 21 and multiplies the selling price by the rate to thereby obtain the affiliate fee. By the above process, the determination unit 14 determines to pay ¥100 to the publisher D.

Therefore, in this example, the determination unit 14 determines the publisher D (10+100=¥110) as the payee of the affiliate fee. Finally, the determination unit 14 clears the cookie and deletes the one second click information used in the above process from the click information database 22.

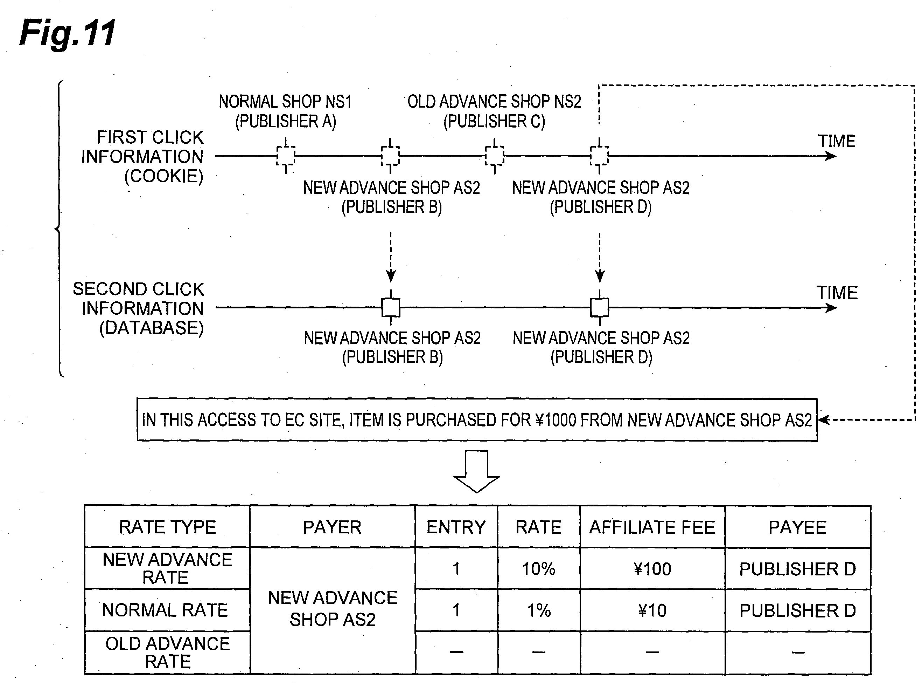

[Example 4-2] Example 4-2 is described using Fig. 11. This example is similar to the above Example 4 but is different from Example 4 in that a user clicks on the affiliate link of the new advance shop AS2 a plurality of times. However, as described earlier, the access monitoring unit 11 overwrites the click information already stored in the click information database 22 (the click information containing the history ID of the user, the new advance shop AS2 and the publisher B) with new click information (the click information containing the history ID of the user, the new advance shop AS2 and the publisher D). Therefore, in Example 4-2 also, the determination unit 14 determines the new advance shop AS2 as a payer of the affiliate fee and determines the publisher D (10+100=¥110) as the payee of the affiliate fee.

Accordingly, a specific procedure is all the same as that of Example 4. The determination unit 14 determines the publisher D of the affiliate link clicked on last as the first payee. Further, the determination unit 14 acquires the normal rate (1%) applied to the new advance shop AS2, which is a selling shop, from the rate database 21 and multiplies the selling price by the rate to thereby obtain the affiliate fee. By the above process, the determination unit 14 determines to pay ¥10 to the publisher D.

Then, the determination unit 14 determines whether the affiliate link of the selling shop has been clicked on before or not. In this example, because the second click information corresponding to the new advance shop AS2 exists as the past click information, the determination unit 14 determines the publisher D indicated by the second click information as the second payee. Further, the determination unit 14 acquires the new advance rate (10%) applied to the new advance shop AS2 from the rate database 21 and multiplies the selling price by the rate to thereby obtain the affiliate fee. By the above process, the determination unit 14 determines to pay ¥100 to the publisher D.

Therefore, the determination unit 14 determines the publisher D (10+100=¥110) as the payee of the affiliate fee. Finally, the determination unit 14 clears the cookie and deletes the one second click information used in the above process from the click information database 22.

As described above, in this embodiment, for a certain combination of a user and a linked shop, a publisher of the affiliate link clicked on last is specified as the second payee and an affiliate fee is paid to the publisher. Thus, an affiliate fee is not paid to a publisher whose click information has been deleted by overwrite, such as the publisher B in this example.

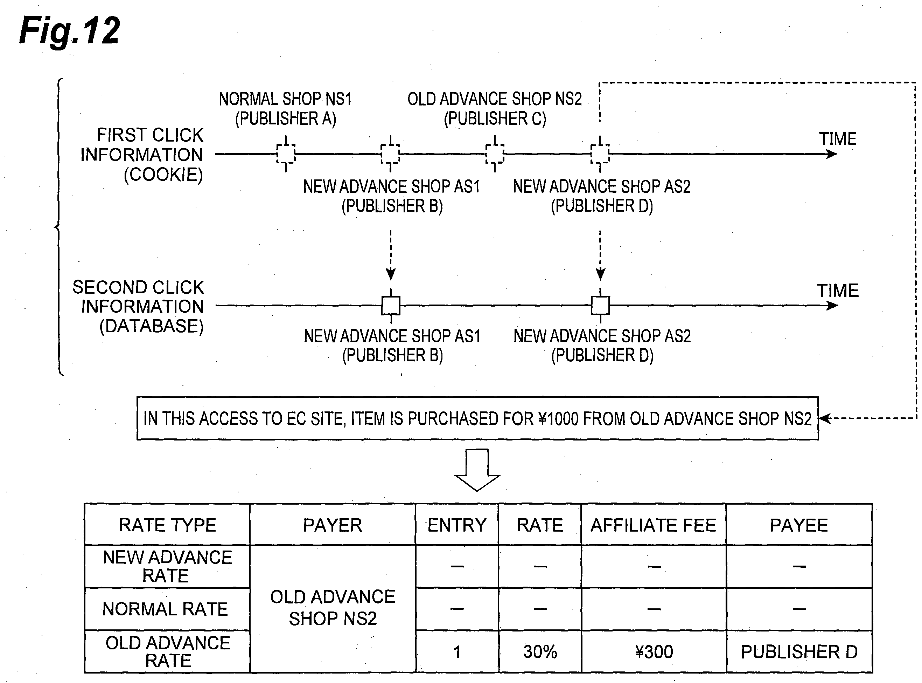

[Example 5] Example 5 is described using Fig. 12. In this example, a user purchases an item from an old normal shop that is not indicated by the last click information. The determination unit 14 determines an old advance shop NS2 as a payer of the Affiliate fee. The determination unit 14 then determines a payee of the affiliate fee and the rate as follows.

First, the determination unit 14 determines a publisher D of the affiliate link clicked on last as the first payee. Further, the determination unit 14 acquires the normal rate (30%) applied to the old advance shop NS2, which is a selling shop, from the rate database 21 and multiplies the selling price by the rate to thereby obtain the affiliate fee. By the above process, the determination unit 14 determines to pay ¥300 to the publisher D.

Because the selling shop in this example is not a new advance shop but an old advance shop, the determination unit 14 does not perform the process about the second click information. Although the affiliate link to the old advance shop NS2 has been clicked by the purchaser in the past, the click information indicating that click is already overwritten in the cookie and further not stored in the click information database 22, and therefore a publisher C cannot be selected as a payee of the affiliate fee.

Therefore, in this example, the determination unit 14 determines the publisher D (¥300) as the payee of the affiliate fee. Finally, the determination unit 14 clears the cookie.

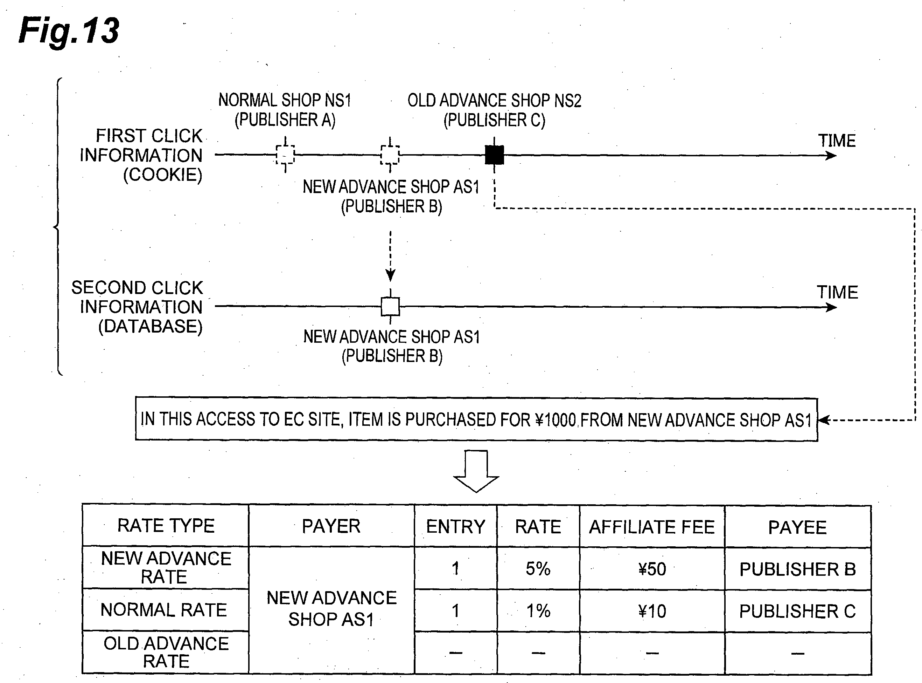

[Example 6] Example 6 is described using Fig. 13. In this example, a user purchases an item from a new advance shop indicated by the past click information, not from a shop indicated by the last click information. Although this example is different from Example 1 in that the affiliate link clicked on last is not a link to a normal shop but a link to an old advance shop, the procedure is all the same as that of Example 1. The determination unit 14 determines a new advance shop AS1 as a payer of the affiliate fee. The determination unit 14 then determines a payee of the affiliate fee and the rate as follows.

First, the determination unit 14 determines a publisher C of the affiliate link clicked on last as the first payee. Further, the determination unit 14 acquires the normal rate (1%) applied to the new advance shop AS1, which is a selling shop, from the rate database 21 and multiplies the selling price by the rate to thereby obtain the affiliate fee. By the above process, the determination unit 14 determines to pay ¥10 to the publisher C.

Then, the determination unit 14 determines whether the affiliate link of the selling shop has been clicked on before or not. In this example, because the selling shop is the new advance shop AS1 and the second click information corresponding to this shop exists, the determination unit 14 determines the publisher B indicated by the second click information as the second payee. Further, the determination unit 14 acquires the new advance rate (5%) applied to the new advance shop AS 1, which is a selling shop, from the rate database 21 and multiplies the selling price by the rate to thereby obtain the affiliate fee. By the above process, the determination unit 14 determines to pay ¥50 to the publisher B.

Therefore, in this example, the determination unit 14 determines the publisher C (¥10) and the publisher B (¥50) as the payee of the (affiliate fee. Finally, the determination unit 14 clears the cookie and deletes the one second click information used in this process from the click information database 22.

Hereinafter, a process in the case where a user accesses the EC site by clicking on an affiliate link and executes a purchase procedure twice in the site (process for continuous purchase) is described as Examples 7 to 11.

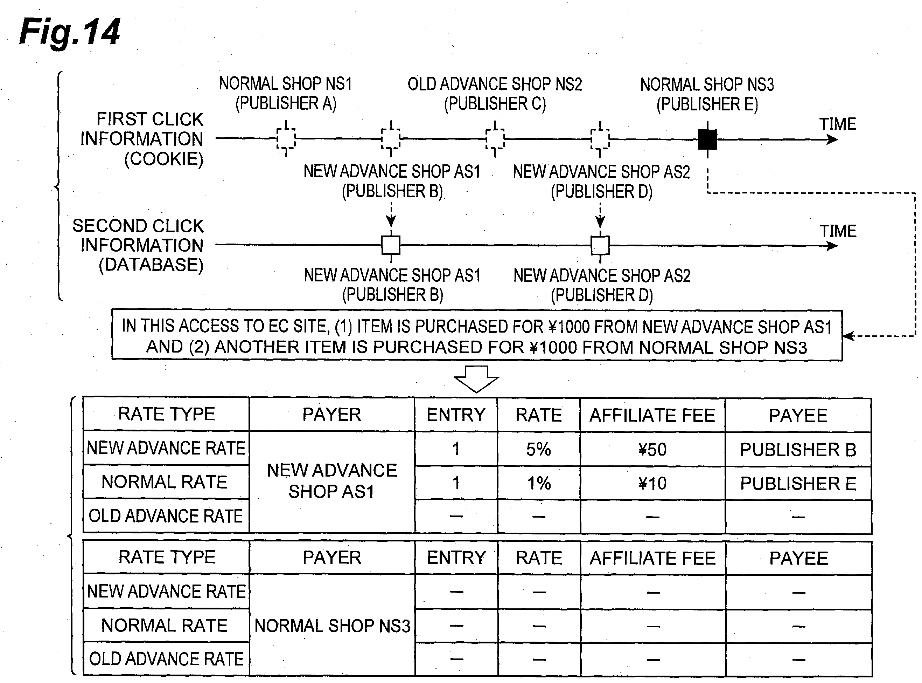

[Example 7] Example 7 is described using Fig. 14. In this example, a user purchases an item from a new advance shop indicated by the past click information and then purchases another item from a normal shop indicated by the last click information. In this example, purchase made at a new advance shop AS1 and purchase made at a normal shop NS3 are referred to as purchases K1 and K2, respectively.

First, the determination unit 14 performs a determination process for the purchase K1. The determination process is the same as in Example 1 described above. Thus, the determination unit 14 determines the publisher E (¥10) and the publisher B (¥50) as the payee of the affiliate fee.

Next, the determination unit 14 performs a determination process for the purchase K2. The determination unit 14 first specifies the normal shop NS3 as a payer of the affiliate fee. The determination unit 14 then tries to determine a publisher of the affiliate link clicked on last as a payee; however, because the first click information in the cookie has been deleted in the process for the purchase K1, the determination unit 14 cannot specify a payee from the cookie. Thus, the determination unit 14 ends the determination process by the first click information at this point. After that, the determination unit 14 refers to the second click information and determines whether the affiliate link to the selling shop has been clicked on in the past or not. However, because the selling shop in the purchase K2 is not a new advance shop but a normal shop, the determination unit 14 does not perform the process about the second click information. Accordingly, the payment of an affiliate fee related to the purchase K2 does not occur.

Consequently, in this example, the determination unit 14 determines the publisher E (¥10) and the publisher B (¥50) as the payee of the affiliate fee from the new advance shop AS1 and determines not to make payment of the affiliate fee from the normal shop NS3.

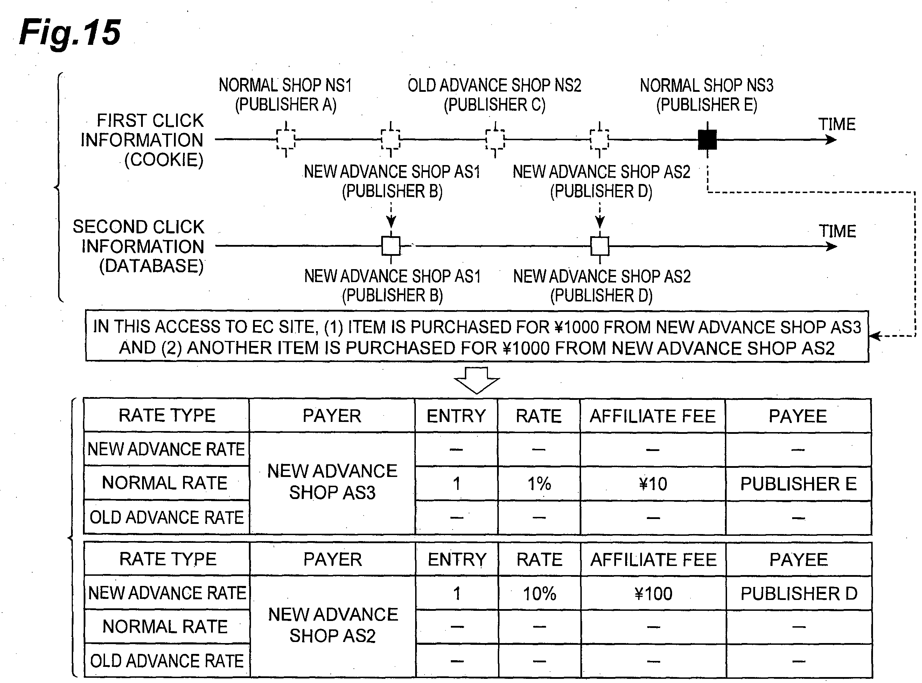

[Example 8] Example 8 is described using Fig. 15. In this example, a user purchases an item from a new advance shop that is not indicated by either of the last click information or the past click information and then purchases another item from a new advance shop indicated by the past click information. In this example, purchases made at new advance shops AS3 and AS2 are referred to as purchases K1 and K2, respectively.

First, the determination unit 14 performs a determination process for the purchase K1. The determination process is the same as in Example 2 described above. Thus, the determination unit 14 determines the publisher E (¥10) as the payee of the affiliate fee.

Next, the determination unit 14 performs a determination process for the purchase K2. The determination unit 14 first specifies the new advance shop AS2 as a payer of the affiliate fee. The determination unit 14 then tries to determine a publisher of the affiliate link clicked on last as a payee; however, because the first click information in the cookie has been deleted in the process for the purchase K1, the determination unit 14 cannot specify a payee from the cookie. Thus, the determination unit 14 ends the determination process by the first click information at this point.

After that, the determination unit 14 refers to the second click information and determines whether the affiliate link to the selling shop has been clicked on in the past or not. In this example, because the second click information corresponding to the new advance shop AS2 exists, the determination unit 14 determines the publisher D indicated by the second click information as the second payee. Further, the determination unit 14 acquires the new advance rate (10%) applied to the new advance shop AS2 from the rate database 21 and multiplies the selling price by the rate to thereby obtain the affiliate fee. By the above process, the determination unit 14 determines to pay ¥100 to the publisher D.

Thus, in this example, the determination unit 14 determines the publisher E (¥10) as the payee of the affiliate fee from the new advance shop AS3 and determines the publisher D (¥100) as the payee of the Affiliate fee from the new advance shop AS2.

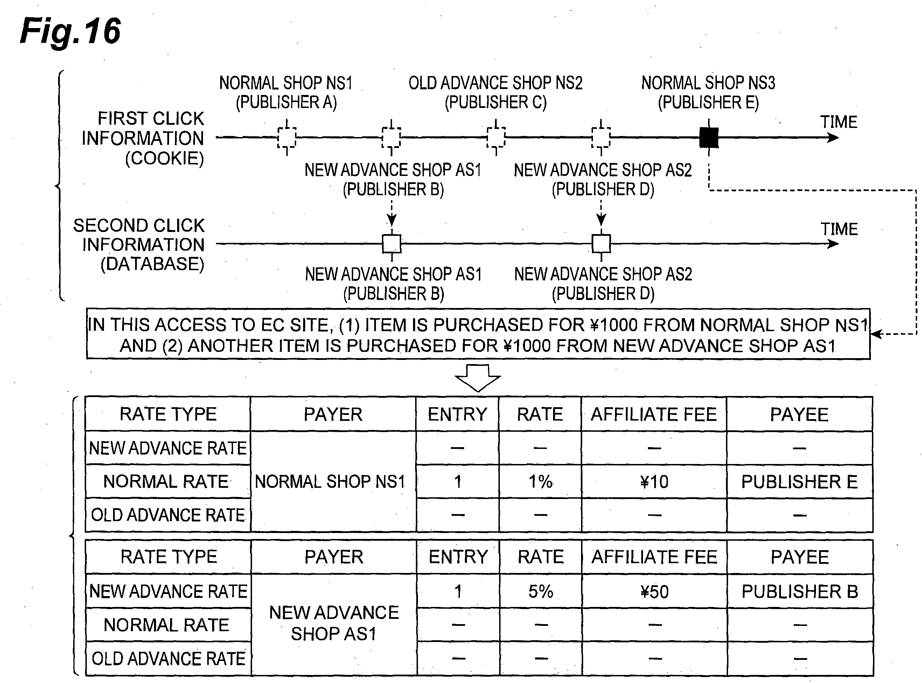

[Example 9] Example 9 is described using Fig. 16. In this example, a user purchases an item from a normal shop indicated by the last click information and then purchases another item from a new advance shop indicated by the past click information. In this example, purchase made at a normal shop NS1 and purchase made at a new advance shop AS1 arse referred to as purchases K1 and K2, respectively.

First, the determination unit 14 performs a determination process for the purchase K1. The determination process is the same as in Example 3 described above. Thus, the determination unit 14 determines the publisher E (¥10) as the payee of the affiliate fee.

Next, the determination unit 14 performs a determination process for the purchase K2. The determination unit 14 first specifies the new advance shop AS1 as a payer of the affiliate fee. The determination unit 14 then tries to determine a publisher of the affiliate link clicked on last as a payee; however, because the first click information in the cookie has been deleted in the process for the purchase K1, the determination unit 14 cannot specify a payee from the cookie. Thus, the determination unit 14 ends the determination process by the first click information at this point.

After that, the determination unit 14 refers to the second click information and determines whether the affiliate link to the selling shop has been clicked on in the past or not. In this example, because the second click information corresponding to the new advance shop AS1 exists, the determination unit 14 determines the publisher B indicated by the second click information as the second payee. Further, the determination unit 14 acquires the new advance rate (5%) applied to the new advance shop AS1 from the rate database 21 and multiplies the selling price by the rate to thereby obtain the affiliate fee. By the above process, the determination unit 14 determines to pay ¥50 to the publisher B.

Thus, in this example, the determination unit 14 determines the publisher E (¥10) as the payee of the affiliate fee from the normal shop NS1 and determines the publisher B (¥50) as the payee of the affiliate fee from the new advance shop AS2.

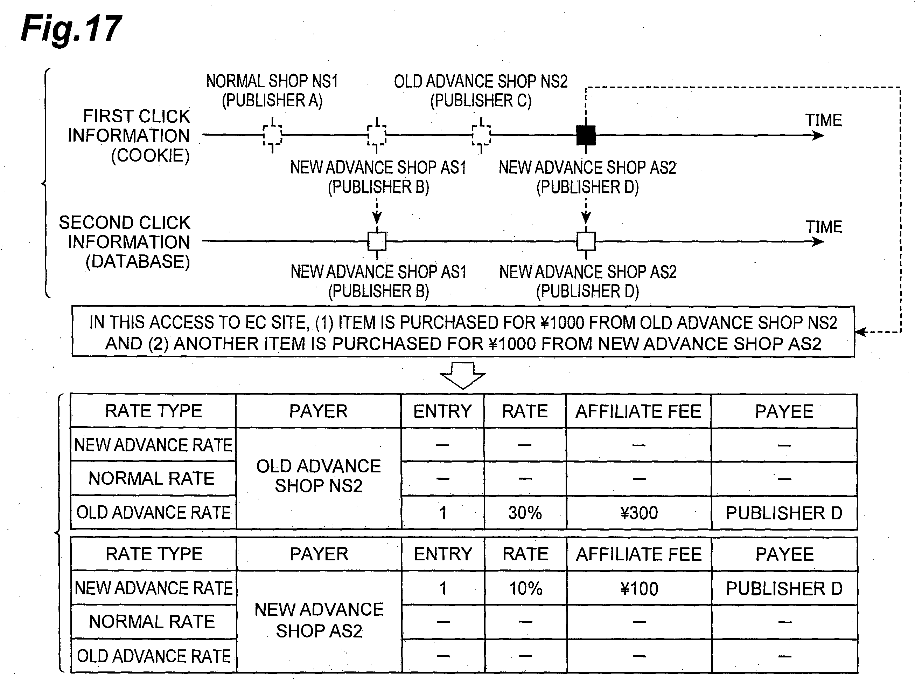

[Example 10] Example 10 is described using Fig. 17. In this example, a user purchases an item from an old advance shop that is not indicated by the last click information and then purchases another item from a new advance shop that is indicated by the last click information and the past click information. In this example, purchase made at an old advance shop NS2 and purchase made at a new advance shop AS2 are referred to as purchases K1 and K2, respectively.

First, the determination unit 14 performs a determination process for the purchase K1. The determination process is the same as in Example 5 described above. Thus, the determination unit 14 determines the publisher D (¥300) as the payee of the affiliate fee.

Next, the determination unit 14 performs a determination process for the purchase K2. The determination unit 14 first specifies the new advance shop AS2 as a payer of the affiliate fee. The determination unit 14 then tries to determine a publisher of the affiliate link clicked on last as a payee; however, because the first click information in the cookie has been deleted in the process for the purchase K1, the determination unit 14 cannot specify a payee from the cookie. Thus, the determination unit 14 ends the determination process by the first click information at this point.

After that, the determination unit 14 refers to the second click information and determines whether the affiliate link to the selling shop has been clicked on in the past or not. In this example, because the second click information corresponding to the new advance shop AS2 exists, the determination unit 14 determines the publisher D indicated by the second click information as the second payee. Further, the determination unit 14 acquires the new advance rate (10%) applied to the new advance shop AS2 from the rate database 21 and multiplies the selling price by the rate to thereby obtain the affiliate fee. By the above process, the determination unit 14 determines to pay ¥100 to the publisher D as an additional affiliate fee.

Thus, in this example, the determination unit 14 determines the publisher D (300+100=¥400) as the payee of the (affiliate fee from the old advance shop NS2 and the new advance shop AS2.

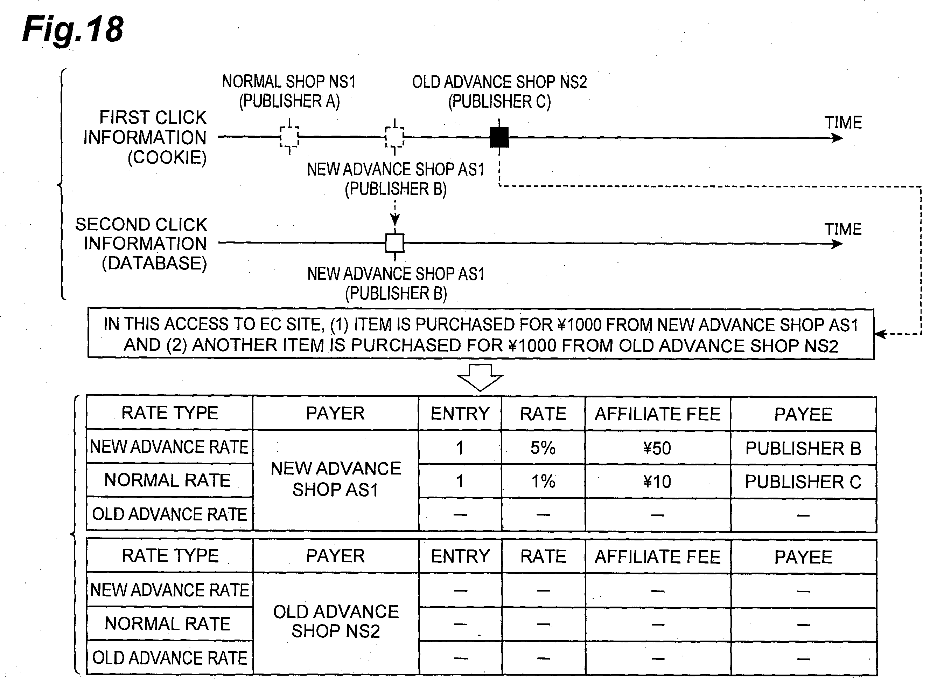

[Example 11] Example 11 is described using Fig. 18. In this example, a user purchases an item from a new advance shop that is not indicated by the last click information but indicated by the past click information and then purchases another item from a new advance shop that is indicated by the last click information. In this example, purchase made at a new advance shop AS1 and purchase made at an old advance shop NS2 are referred to as purchases K1 and K2, respectively.

First, the determination unit 14 performs a determination process for the purchase K1. The determination process is the same as in Example 6 described above. Thus, the determination unit 14 determines the publisher C (¥10) and the publisher B (¥50) as the payee of the affiliate fee.

Next, the determination unit 14 performs a determination process for the purchase K2. The determination unit 14 first specifies the old advance shop NS2 as a payer of the affiliate fee. The determination unit 14 then tries to determine a publisher of the affiliate link clicked on last as a payee; however, because the first click information in the cookie has been deleted in the process for the purchase K1, the determination unit 14 cannot specify a payee from the cookie. Thus, the determination unit 14 ends the determination process by the first click information at this point. After that, the determination unit 14 refers to the second click information and determines whether the affiliate link to the selling shop has been clicked on in the past or not. However, because the selling shop in the purchase K2 is not a new advance shop but an old advance shop, the determination unit 14 does not perform the process about the second click information. Accordingly, the payment of an affiliate fee related to the purchase K2 does not occur.

Consequently, in this example, the determination unit 14 determines the publisher C (¥10) and the publisher B (¥50) as the payee of the affiliate fee from the new advance shop AS1 and determines not to make payment of the affiliate fee from the old advance shop NS2.

In the EC system 1, the affiliate fees determined in the above manner and stored into the affiliate fee database 23 are summarized on a regular basis. Then, the affiliate fee is collected from each shop based on the summation result and distributed to payees, and finally deposited into the account of each payee. Further, the summation result is notified to each shop and each payee. Note that a process in the case where an affiliate link is clicked on and three or more different items are purchased from three or more shops is performed in the same manner as the process for continuous purchase described above.

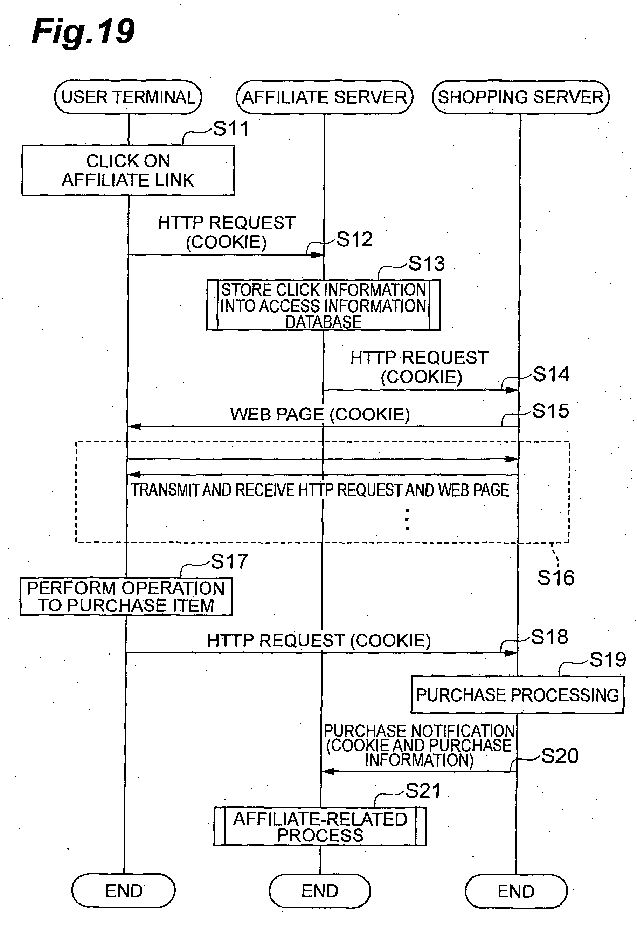

The operation of the EC system 1 is described and further an affiliate management method according to this embodiment is described hereinafter with reference to Figs. 19 to 21.

When a user clicks on an affiliate link on an arbitrary web page (Step S11), the user terminal 40 transmits an HTTP request in accordance with the click operation to the affiliate server 10 (Step S12). The HTTP request contains a cookie.

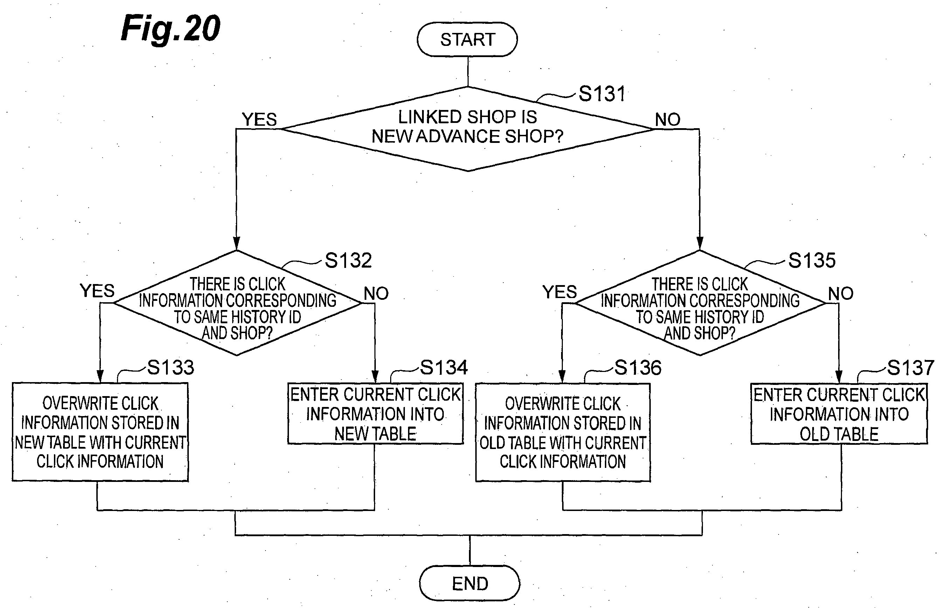

In the affiliate server 10, the access monitoring unit 11 receives the HTTP request and stores click information generated based on the cookie contained in the request into the click information database 22 (Step S 13). Specifically, as shown in Fig. 20, the access monitoring unit 11 determines an affiliate pattern of a linked shop indicated by the cookie (Step S131). When the linked shop is the new advance shop (YES in Step S131), the access monitoring unit 11 performs processing in Steps S132 to S134 and, when the linked shop is the normal shop or the old advance shop (NO in Step S131), it performs processing in Steps S135 to S137.

In the case where the linked shop is the new advance shop, when click information corresponding to the same history ID and shop already exists in the new table (YES in Step S132), the access monitoring unit 11 overwrites the click information with the current click information (Step S133). On the other hand, when such click information does not exist (NO in Step S132), the access monitoring unit 11 enters the current click information into the new table (Step S134).

In the case where the linked shop is the normal shop or the old advance shop, when click information corresponding to the same history ID and shop already exists in the old table (YES in Step S135), the access monitoring unit 11 overwrites the click information with the current click information (Step S136). On the other hand, when such click information does not exist (NO in Step S135), the access monitoring unit 11 enters the current click information into the old table (Step S137).

Then, the access monitoring unit 11 transfers the received HTTP request to the shopping server 30 (Step S14). In accordance with the transfer, the shopping server 30 generates a web page indicated by the affiliate link and transmits the web page to the user terminal 40 (Step S15). The cookie is handed over to the web page.

After that, the HTTP request and the web page corresponding to the request are transmitted and received between the user terminal 40 and the shopping server 30 (Step S16), and the cookie is handed over in this processing as well. In Step S16, there is a possibility that processing equivalent of the above Steps S11 to S 15 is performed, caused by a user's click on another affiliate link. When this processing is performed, the first click information in the cookie can be overwritten. Further, the click information is stored into the click information database 22 as in the above Step S13.

Then, when a user performs an operation to purchase a specific item from a specific shop (Step S17), an HTTP request in accordance with the operation is transmitted to the shopping server 30 (Step S18), and purchase processing is performed in the shopping server 30 (Step S 19). When the purchase processing completes, a purchase notification containing the cookie handed over in the processing after Step S11 and purchase information generated based on the current purchase processing is transferred to the Affiliate server 10 (Step S20). Then, in the affiliate server 10, a payee of an affiliate fee and the amount of the affiliate fee are determined (Step S21).

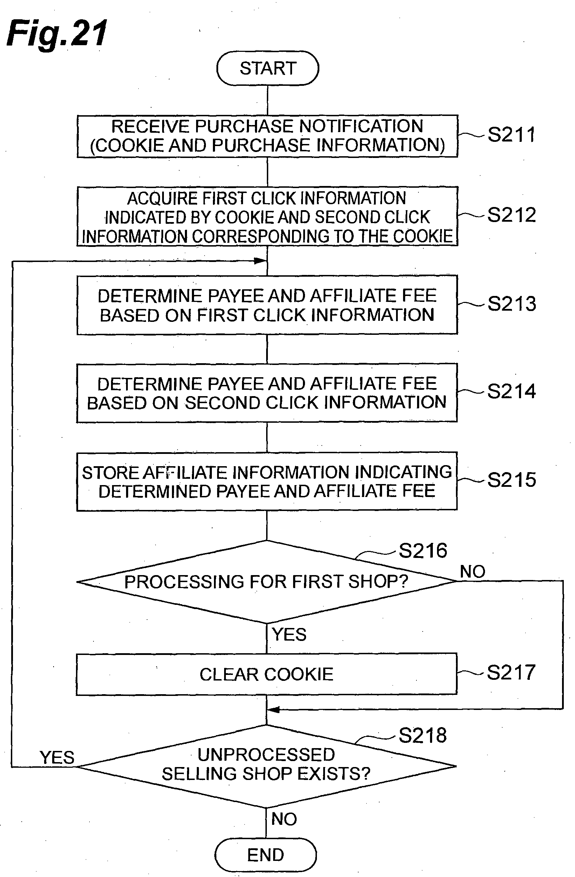

The details of the determination process are as shown in Fig. 21. First, the purchase information acquisition unit 12 receives the purchase notification (S211, acquisition step). Next, the history specifying unit 13 extracts first click information from the cookie contained in the purchase notification and further acquires second click information corresponding to the history ID of the cookie from the click information database 22, thereby specifying the click history of the purchaser (Step S212, specifying step).

Then, the determination unit 14 determines a payee of an affiliate fee and the amount of the affiliate fee based on the click history. First, the determination unit 14 determines a payee and an affiliate fee based on the first click information (Step S213, determination step) and then determines a payee and an affiliate fee based on the second click information (Step S214, determination step). This determination is as described above in Examples 1 to 11. After that, the determination unit 14 generates affiliate information indicating the determined payee and affiliate fee and stores it into the affiliate fee database 23 (Step S215). When this is processing for the first shop (YES in Step S216), the determination unit 14 clears the cookie and thereby deletes the first click information (Step S217). The determination unit 14 performs this processing for all selling shops (see Step S218). The affiliate management for one purchase processing (including continuous purchase) of one purchaser thereby ends.

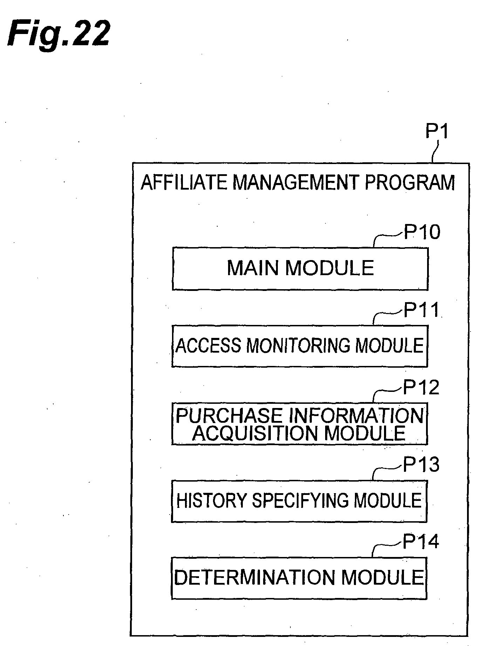

An affiliate management program P1 that causes a computer to function as an EC server 10 is described hereinafter with reference to Fig. 22.

The affiliate management program P1 includes a main module P10, an access monitoring module P11, a purchase information acquisition module P12, a history specifying module P13, and a determination module P14.

The main module P10 is a part that exercises control over the affiliate management function. The functions implemented by the main module P10, the access monitoring module P11, the purchase information acquisition module P12, the history specifying module P13, and the determination module P14 are respectively the same as the functions of the access monitoring unit 11, the purchase information acquisition unit 12, the history specifying unit 13 and the determination unit 14.

The affiliate management program P1 is provided in the form of being fixedly recorded on a recording medium such as CD-ROM or DVD-ROM, or semiconductor memory, for example. Further, the affiliate management program P1 may be provided as a data signal superimposed on a carrier wave through a communication network.

As described above, according to the embodiment, because a payee and the amount of payment are determined in consideration of which affiliate link a purchaser of an item has clicked on in the past, it is possible to bring a certain satisfaction to both a selling shop to pay an affiliate fee and an advertisement publisher to receive the affiliate fee.

In this embodiment, an affiliate fee is paid to a publisher of an affiliate link clicked on last. Further, for the new advance shop, when a linked shop from an affiliate link clicked on in the past and a selling shop are the same, an affiliate link is paid also to a publisher of the link. In this manner, by determining a payee and the amount of payment in consideration of not only an affiliate link clicked on last but also an affiliate link clicked on in the past, it is possible to bring a certain satisfaction to both the selling shop and the advertisement publisher.

Because an affiliate link clicked on in the past is taken into consideration only in the case of the new advance shop, the new advance shop is more in line with the actual conditions than the normal shop and the old advance shop in terms of the affiliate fee payment rule. Further, by making the new advance rate higher than the normal rate, precedence can be given to an affiliate contract for the new advance shop over that for shops of the other patterns. By setting the new advance shop in this manner, it is possible to allow more member shops to become the new advance shop.

In this embodiment, because click information for which payment of an affiliate fee is determined is deleted, it is possible to pay an affiliate fee appropriate for the actual number of clicks on an affiliate link to an advertisement publisher.

In this embodiment, because only the last click information is saved in the cookie and the click information before that is stored into the click information database 22, it is possible to suppress the amount of data in the cookie and thereby reduce a load of communication processing.

Embodiments of the present invention are described in detail above. However, the present invention is not limited to the above-described embodiments. Various changes and modifications may be made to the present invention without departing from the scope of the invention.

Although a publisher indicated by the last click information is unconditionally determined as a payee of an affiliate fee in the above embodiment, an affiliate fee may be paid to the publisher only when a selling shop and a linked shop are the same regarding the last click information as well.

Although the old table and the new table are used in the above embodiment, only the new table may be used. Specifically, only the latest click information may be saved in the cookie, and only the click information related to the new advance shop may be stored into the database.

Although the normal shop, the old advance shop and the new advance shop are shown as the affiliate patterns in the above embodiment, the affiliate pattern may be only the new advance shop or may be only the normal shop and the new advance shop.

Although the rate is set for each shop in the above embodiment, a method of setting the rate is not particularly limited. For example, the rate may be set for each item, the rate may be set for each combination of a shop and an advertisement publisher, or the rate may be set for each combination of an item and an advertisement publisher.

### Industrial Applicability

1...EC system 10...affiliate server, 11...access monitoring unit, 12...purchase information acquisition unit, 13...history specifying unit, 14... determination unit, 20... databases, 21...rate database, 22... click information database, 23... affiliate fee database, 30... shopping server, 40... user terminal, 50... shop terminal, P1...affiliate management program, P10...main module, P11...access monitoring module, P12...purchase information acquisition module, P13...history specifying module, P14...determination module

## Claims

1. An affiliate management device (10) comprising:
an access monitoring unit (11) that, in accordance with a user's click on an affiliate link, receives an HTTP request including an HTTP cookie containing a publisher of the affiliate link, a linked shop from the affiliate link and a history ID of the user from a user terminal (40), stores past click information generated based on the HTTP cookie into a database (22), and transmits the HTTP request to a server (30) to cause the server (30) to generate a web page in accordance with the HTTP request and transmit the web page to the user terminal (40), the HTTP cookie containing only last click information related to an affiliate link clicked on last, the access monitoring unit (11) overwriting another click information with new click information when the another click information corresponding to a linked shop and a user indicated by the new click information to be stored into the database (22) is already stored in the database (22);
an acquisition unit (12) that acquires a purchase notification containing purchase information indicating a purchaser of an item and a selling shop of the item and the HTTP cookie, from the server (30);
a specifying unit (13) that acquires the last click information from the HTTP cookie contained in the purchase notification, acquires past click information corresponding to a user indicated by the last click information, the past click information relating to affiliate links clicked on before when an affiliate link is clicked on last, and specifies a click history indicating click on affiliate links by the purchaser based on the acquired last click information and the acquired past click information; and
a determination unit (14) that determines one or more publishers to receive an affiliate fee from the selling shop and an affiliate fee to be paid to each publisher based on the click history, wherein
the determination unit (14) determines the publisher indicated by the last click information as a first payee of an affiliate fee from the selling shop and, when the linked shop indicated by the past click information and the selling shop are the same, determines the publisher indicated by the past click information as a second payee of an affiliate fee from the selling shop, and
the determination unit (14) deletes the last click information by clearing the HTTP cookie and deletes the past click information corresponding to the second payee from the database (22) after determining one or more publishers to receive an affiliate fee from the selling shop and an affiliate fee to be paid to each publisher.

2. The affiliate management device (10) according to Claim 1, wherein
when the purchaser purchases a first item from a first selling shop and then purchases a second item from a second selling shop, the determination unit (14) determines the first and second payees of an affiliate fee from the first selling shop and then determines a further payee of an affiliate fee from the second selling shop based on the past click information in the click history remaining after the last click information and the past click information corresponding to the second payee are deleted.

3. The affiliate management device (10) according to Claim 2, wherein
the linked shop includes a type 1 shop and a type 2 shop,
a type 1 rate used for calculation of an affiliate fee to the first payee is set for the type 1 shop,
the type 1 rate and a type 2 rate used for calculation of an additional affiliate fee to the first payee or an affiliate fee to the second payee are set for the type 2 shop, and
the determination unit (14) does not determine a further payee of an affiliate fee from the second selling shop when the second selling shop is the type 1 shop, and determines a further payee of an affiliate fee from the second selling shop when the second selling shop is the type 2 shop.

4. An affiliate management method executed by an affiliate management device (10), the method comprising:
an access monitoring step of, in accordance with a user's click on an affliate link, receiving an HTTP request including an HTTP cookie containing a publisher of the affiliate link, a linked shop from the affiliate link and a history ID of the user from a user terminal (40), storing past click information generated based on the HTTP cookie into a database (22), and transmitting the HTTP request to a server (30) to cause the server (30) to generate a web page in accordance with the HTTP request and transmit the web page to the user terminal (40), the HTTP cookie containing only last click information related to an affiliate link clicked on last, the access monitoring step overwriting another click information with new click information when the another click information corresponding to a linked shop and a user indicated by the new click information to be stored into the database (22) is already stored in the database (22);
an acquisition step of acquiring a purchase notification containing purchase information indicating a purchaser of an item and a selling shop of the item and the HTTP cookie, from the server (30);
a specifying step of acquiring the last click information from the HTTP cookie contained in the purchase notification, acquiring the past click information corresponding to a user indicated by the last click information, the past click information relating to affiliate links clicked on before when an affiliate link is clicked on last, and specifying a click history indicating click on affiliate links by the purchaser based on the acquired last click information and the acquired past click information; and
a determination step of determining one or more publishers to receive an affiliate fee from the selling shop and an affiliate fee to be paid to each publisher based on the click history, wherein
the determination step determines the publisher indicated by the last click information as a first payee of an affiliate fee from the selling shop and, when the linked shop indicated by the past click information and the selling shop are the same, determines the publisher indicated by the past click information as a second payee of an affiliate fee from the selling shop, and
the determination step deletes the last click information by clearing the HTTP cookie and deletes the past click information corresponding to the second payee from the database (22) after determining one or more publishers to receive an affiliate fee from the selling shop and an affiliate fee to be paid to each publisher.

5. An affiliate management program causing a computer (10) to implement:
an access monitoring unit (11) that, in accordance with a user's click on an affiliate link, receives an HTTP request including an HTTP cookie containing a publisher of the affiliate link, a linked shop from the affiliate link and a history ID of the user from a user terminal (40), stores past click information generated based on the HTTP cookie into a database (22), and transmits the HTTP request to a server (30) to cause the server (30) to generate a web page in accordance with the HTTP request and transmit the web page to the user terminal (40), the HTTP cookie containing only last click information related to an affiliate link clicked on last, the access monitoring unit (11) overwriting another click information with new click information when the another click information corresponding to a linked shop and a user indicated by the new click information to be stored into the database (22) is already stored in the database (22);
an acquisition unit (12) that acquires a purchase notification containing purchase information indicating a purchaser of an item and a selling shop of the item and the HTTP cookie, from the server (30);
a specifying unit (13) that acquires the last click information from the HTTP cookie contained in the purchase notification, acquires the past click information corresponding to a user indicated by the last click information, the past click information relating to affiliate links clicked on before when an affiliate link is clicked on last, and specifies a click history indicating click on affiliate links by the purchaser based on acquired last click information and the acquired past click information; and
a determination unit (14) that determines one or more publishers to receive an affiliate fee from the selling shop and an affiliate fee to be paid to each publisher based on the click history, wherein
the determination unit (14) determines the publisher indicated by the last click information as a first payee of an affiliate fee from the selling shop and, when the linked shop indicated by the past click information and the selling shop are the same, determines the publisher indicated by the past click information as a second payee of an affiliate fee from the selling shop, and
the determination unit (14) deletes the last click information by clearing the HTTP cookie and deletes the past click information corresponding to the second payee from the database (22) after determining one or more publishers to receive an affiliate fee from the selling shop and an affiliate fee to be paid to each publisher.

6. A computer-readable recording medium storing an affiliate management program causing a computer (10) to implement:
an access monitoring unit (11) that, in accordance with a user's click on an affiliate link, receives an HTTP request including an HTTP cookie containing a publisher of the affiliate link, a linked shop from the affiliate link and a history ID of the user from a user terminal (40), stores past click information generated based on the HTTP cookie into a database (22), and transmits the HTTP request to a server (30) to cause the server (30) to generate a web page in accordance with the HTTP request and transmit the web page to the user terminal (40), the HTTP cookie containing only last click information related to an affiliate link clicked on last, the access monitoring unit (11) overwriting another click information with new click information when the another click information corresponding to a linked shop and a user indicated by the new click information to be stored into the database (22) is already stored in the database (22);
an acquisition unit (12) that acquires a purchase notification containing purchase information indicating a purchaser of an item and a selling shop of the item and the HTTP cookie, from the server (30);
a specifying unit (13) that acquires the last click information from the HTTP cookie contained in the purchase notification, acquires the past click information corresponding to a user indicated by the last click information, the past click information relating to affiliate links clicked on before when an affiliate link is clicked on last, and specifies a click history indicating click on affiliate links by the purchaser based on the last click information and the acquired past click information; and
a determination unit (14) that determines one or more publishers to receive an affiliate fee from the selling shop and an affiliate fee to be paid to each publisher based on the click history, wherein
the determination unit (14) determines the publisher indicated by the last click information as a first payee of an affiliate fee from the selling shop and, when the linked shop indicated by the past click information and the selling shop are the same, determines the publisher indicated by the past click information as a second payee of an affiliate fee from the selling shop, and
the determination unit (14) deletes the last click information by clearing the HTTP cookie and deletes the past click information corresponding to the second payee from the database (22) after determining one or more publishers to receive an affiliate fee from the selling shop and an affiliate fee to be paid to each publisher.

## Patentansprüche

1. Partner-Verwaltungsvorrichtung (10), mit:
einer Zugriffsüberwachungseinheit (11), die, entsprechend einem Klick eines Benutzers auf einen Partner-Link, eine HTTP-Anforderung mit einem HTTP-Cookie erhält, das einen Herausgeber des Partner-Links, einen verbundenen Shop aus dem Partner-Link und eine Geschichts-ID des Benutzers von einem Benutzerendgerät (40) enthält, vergangene Klick-Information, die auf Basis des HTTP-Cookies erzeugt wurden, in einer Datenbank (22) speichert und die HTTP-Anforderung an einen Server (30) übermittelt, um den Server (30) zu veranlassen, eine Web-Seite entsprechend der HTTP-Anforderung zu erzeugen und die Web-Seite an das Benutzer-Endgerät (40) zu übermitteln, wobei das HTTP-Cookie lediglich letzte Klick-Information mit Bezug auf einen Partner-Link aufweist, der als letztes angeklickt wurde, wobei die Zugriffsüberwachungseinheit (11) eine andere Klick-Information mit neuer Klick-Information überschreibt, wenn die andere Klick-Information entsprechend einem verbundenen Shop und einem Benutzer, der durch die neue Klick-Information angegeben wird, die in der Datenbank (22) zu speichern ist, bereits in der Datenbank (22) gespeichert ist,
einer Beschaffungseinheit (12), die eine Kaufbenachrichtigung mit Kaufinformation, die einen Käufer eines Postens und einen verkaufenden Shop und das HTTP-Cookie angibt, von dem Server (30) beschafft,
einer Spezifiziereinheit (13), die die letzte Klick-Information aus dem HTTP-Cookie beschafft, die in der Kaufbenachrichtigung enthalten ist, vergangene Klick-Information entsprechend zu einem Benutzer beschafft, der durch die letzte Klick-Information bezeichnet ist, wobei die vergangene Klick-Information zu Partner-Links in Beziehung steht, die zuvor angeklickt wurden, wenn ein Partner-Link als letztes angeklickt wurde, und die auf Basis der beschafften letzten Klick-Information und der beschafften vergangenen Klick-Situation eine Klick-Historie spezifiziert, die einen Klick auf Partner-Links durch den Käufer angibt, und
einer Bestimmungseinheit (14), die auf Basis der Klick-Historie einen oder mehr Herausgeber zum Erhalten einer Partner-Gebühr von dem verkaufenden Shop und eine an jeden Herausgeber zu zahlende Partner-Gebühr bestimmt, wobei
die Bestimmungseinheit (14) den Herausgeber, der durch die letzte Klick-Information bezeichnet wird, als ersten Empfänger einer Partner-Gebühr von dem verkaufenden Shop bestimmt und, wenn der verbundene Shop, der durch die vergangene Klick-Information bezeichnet ist, und der verkaufende Shop der gleiche sind, den Herausgeber, der durch die vergangene Klick-Information bezeichnet wird, als zweiten Empfänger einer Partner-Gebühr von dem verkaufenden Shop bestimmt, und
die Bestimmungseinheit (14) die letzte Klick-Information durch Klären des HTTP-Cookies löscht und die vergangene Klick-Information entsprechend dem zweiten Empfänger aus der Datenbank (22) nach Bestimmen eines oder mehrerer Herausgeber zum Empfangen einer Partner-Gebühr von dem verkaufenden Shop und einer Partner-Gebühr löscht, die an jeden Herausgeber zu zahlen ist.

2. Partner-Verwaltungsvorrichtung (10) nach Anspruch 1, wobei
die Bestimmungseinheit (14) den ersten und den zweiten Empfänger einer Partner-Gebühr von dem ersten verkaufenden Shop bestimmt, wenn der Käufer einen ersten Posten von einem ersten verkaufenden Shop und dann einen zweiten Posten von einem zweiten verkaufenden Shop kauft, und dann einen weiteren Empfänger einer Partner-Gebühr von dem zweiten verkaufenden Shop auf Basis der vergangenen Klick-Information in der Klick-Historie bestimmt, die verbleibt, nachdem die letzte Klick-Information und die vergangene Klick-Information entsprechend dem zweiten Empfänger gelöscht sind.

3. Partner-Verwaltungsvorrichtung (10) nach Anspruch 2, wobei der verbundene Shop einen Typ-1-Shop und einen Typ-2-Shop umfasst,
ein Typ-1-Satz zur Berechnung einer Partner-Gebühr an den ersten Empfänger für den Typ-1-Shop eingestellt ist,
der Typ-1-Satz und ein Typ-2-Satz, der zur Berechnung einer zusätzlichen Partner-Gebühr an den ersten Empfänger oder eine Partner-Gebühr an den zweiten Empfänger verwendet wird, für den Typ-2-Shop eingestellt sind, und
die Bestimmungseinheit (14) keinen weiteren Empfänger einer Partner-Gebühr von dem zweiten verkaufenden Shop bestimmt, wenn der zweite verkaufende Shop der Typ-1-Shop ist, und einen weiteren Empfänger einer Partner-Gebühr von dem zweiten verkaufenden Shop bestimmt, wenn der zweite verkaufende Shop der Typ-2-Shop ist.

4. Partner-Verwaltungsverfahren, das von einer Partner-Verwaltungsvorrichtung (10) ausgeführt wird, wobei das Verfahren umfasst:
einen Zugriffsüberwachungsschritt des Erhaltens, entsprechend einem Klick eines Benutzers auf einen Partner-Link, einer HTTP-Anforderung mit einem HTTP-Cookie, das einen Herausgeber des Partner-Links, einen verbundenen Shop aus dem Partner-Link und eine Geschichts-ID des Benutzers von einem Benutzerendgerät (40) enthält, des Speicherns vergangener Klick-Information, die auf Basis des HTTP-Cookies erzeugt wurden, in einer Datenbank (22) und des Übermitteln der HTTP-Anforderung an einen Server (30)" um den Server (30) zu veranlassen, eine Web-Seite entsprechend der HTTP-Anforderung zu erzeugen und die Web-Seite an das Benutzer-Endgerät (40) zu übermitteln, wobei das HTTP-Cookie lediglich letzte Klick-Information mit Bezug auf einen Partner-Link aufweist, der als letztes angeklickt wurde, wobei die Zugriffsüberwachungseinheit (11) eine andere Klick-Information mit neuer Klick-information überschreibt, wenn die andere Klick-Information entsprechend einem verbundenen Shop und einem Benutzer, der durch die neue Klick-Information angegeben wird, die in der Datenbank (22) zu speichern ist, bereits in der Datenbank (22) gespeichert ist,
einem Beschaffungsschritt des Beschaffens einer Kaufbenachrichtigung mit Kaufinformation, die einen Käufer eines Postens und einen verkaufenden Shop und das HTTP-Cookie angibt, von dem Server (30),
einem Spezifizierschritt des Beschaffens der letzten Klick-Information aus dem HTTP-Cookie, die in der Kaufbenachrichtigung enthalten ist, des Beschaffens vergangener Klick-Information entsprechend zu einem Benutzer, der durch die letzte Klick-Information bezeichnet ist, wobei die vergangene Klick-Information zu Partner-Links in Beziehung steht, die zuvor angeklickt wurden, wenn ein Partner-Link als letztes angeklickt wurde, und des Spezifizierens einer Klick-Historie, die einen Klick auf Partner-Links durch den Käufer angibt, auf Basis der beschafften letzten Klick-Information und der beschafften vergangenen Klick-Situation und
einem Bestimmungsschritt des Bestimmens eines oder mehr Herausgeber zum Erhalten einer Partner-Gebühr von dem verkaufenden Shop und einer an jeden Herausgeber zu zahlenden Partner-Gebühr auf Basis der Klick-Historie, wobei
der Bestimmungsschritt den Herausgeber, der durch die letzte Klick-Information bezeichnet wird, als ersten Empfänger einer Partner-Gebühr von dem verkaufenden Shop bestimmt und, wenn der verbundene Shop, der durch die vergangene Klick-Information bezeichnet ist, und der verkaufende Shop der gleiche sind, den Herausgeber, der durch die vergangene Klick-Information bezeichnet wird, als zweiten Empfänger einer Partner-Gebühr von dem verkaufenden Shop bestimmt, und
der Bestimmungsschritt die letzte Klick-Information durch Klären des HTTP-Cookies löscht und die vergangene Klick-Information entsprechend dem zweiten Empfänger aus der Datenbank (22) nach Bestimmen eines oder mehrerer Herausgeber zum Empfangen einer Partner-Gebühr von dem verkaufenden Shop und einer Partner-Gebühr löscht, die an jeden Herausgeber zu zahlen ist.

5. Partner-Verwaltungsprogramm, das einen Computer (10) dazu veranlasst,
eine Zugriffsüberwachungseinheit (11), die, entsprechend einem Klick eines Benutzers auf einen Partner-Link, eine HTTP-Anforderung mit einem HTTP-Cookie erhält, das einen Herausgeber des Partner-Links, einen verbundenen Shop aus dem Partner-Link und eine Geschichts-ID des Benutzers von einem Benutzerendgerät (40) enthält, vergangene Klick-Information, die auf Basis des HTTP-Cookies erzeugt wurden, in einer Datenbank (22) speichert und die HTTP-Anforderung an einen Server (30) übermittelt, um den Server (30) zu veranlassen, eine Web-Seite entsprechend der HTTP-Anforderung zu erzeugen und die Web-Seite an das Benutzer-Endgerät (40) zu übermitteln, wobei das HTTP-Cookie lediglich letzte Klick-Information mit Bezug auf einen Partner-Link aufweist, der als letztes angeklickt wurde, wobei die Zugriffsüberwachungseinheit (11) eine andere Klick-Information mit neuer Klick-Information überschreibt, wenn die andere Klick-Information entsprechend einem verbundenen Shop und einem Benutzer, der durch die neue Klick-Information angegeben wird, die in der Datenbank (22) zu speichern ist, bereits in der Datenbank (22) gespeichert ist,
eine Beschaffungseinheit (12), die eine Kaufbenachrichtigung mit Kaufinformation, die einen Käufer eines Postens und einen verkaufenden Shop und das HTTP-Cookie angibt, von dem Server (30) beschafft,
eine Spezifiziereinheit (13), die die letzte Klick-Information aus dem HTTP-Cookie beschafft, die in der Kaufbenachrichtigung enthalten ist, vergangene Klick-Information entsprechend zu einem Benutzer beschafft, der durch die letzte Klick-Information bezeichnet ist, wobei die vergangene Klick-Information zu Partner-Links in Beziehung steht, die zuvor angeklickt wurden, wenn ein Partner-Link als letztes angeklickt wurde, und die auf Basis der beschafften letzten Klick-Information und der beschafften vergangenen Klick-Situation eine Klick-Historie spezifiziert, die einen Klick auf Partner-Links durch den Käufer angibt, und
eine Bestimmungseinheit (14) zu implementieren, die auf Basis der Klick-Historie einen oder mehr Herausgeber zum Erhalten einer Partner-Gebühr von dem verkaufenden Shop und eine an jeden Herausgeber zu zahlende Partner-Gebühr bestimmt, wobei
die Bestimmungseinheit (14) den Herausgeber, der durch die letzte Klick-Information bezeichnet wird, als ersten Empfänger einer Partner-Gebühr von dem verkaufenden Shop bestimmt und, wenn der verbundene Shop, der durch die vergangene Klick-Information bezeichnet ist, und der verkaufende Shop der gleiche sind, den Herausgeber, der durch die vergangene Klick-Information bezeichnet wird, als zweiten Empfänger einer Partner-Gebühr von dem verkaufenden Shop bestimmt, und
die Bestimmungseinheit (14) die letzte Klick-Information durch Klären des HTTP-Cookies löscht und die vergangene Klick-Information entsprechend dem zweiten Empfänger aus der Datenbank (22) nach Bestimmen eines oder mehrerer Herausgeber zum Empfangen einer Partner-Gebühr von dem verkaufenden Shop und einer Partner-Gebühr löscht, die an jeden Herausgeber zu zahlen ist.

6. Computer-lesbares Aufzeichnungsmedium, das ein Partner-Verwaltungsprogramm speichert, das einen Computer (10) dazu veranlasst,
eine Zugriffsüberwachungseinheit (11), die, entsprechend einem Klick eines Benutzers auf einen Partner-Link, eine HTTP-Anforderung mit einem HTTP-Cookie erhält, das einen Herausgeber des Partner-Links, einen verbundenen Shop aus dem Partner-Link und eine Geschichts-ID des Benutzers von einem Benutzerendgerät (40) enthält, vergangene Klick-Information, die auf Basis des HTTP-Cookies erzeugt wurden, in einer Datenbank (22) speichert und die HTTP-Anforderung an einen Server (30) übermittelt, um den Server (30) zu veranlassen, eine Web-Seite entsprechend der HTTP-Anforderung zu erzeugen und die Web-Seite an das Benutzer-Endgerät (40) zu übermitteln, wobei das HTTP-Cookie lediglich letzte Klick-Information mit Bezug auf einen Partner-Link aufweist, der als letztes angeklickt wurde, wobei die Zugriffsüberwachungseinheit (11) eine andere Klick-Information mit neuer Klick-Information überschreibt, wenn die andere Klick-Information entsprechend einem verbundenen Shop und einem Benutzer, der durch die neue Klick-Information angegeben wird, die in der Datenbank (22) zu speichern ist, bereits in der Datenbank (22) gespeichert ist,
eine Beschaffungseinheit (12), die eine Kaufbenachrichtigung mit Kaufinformation, die einen Käufer eines Postens und einen verkaufenden Shop und das HTTP-Cookie angibt, von dem Server (30) beschafft,
eine Spezifiziereinheit (13), die die letzte Klick-Information aus dem HTTP-Cookie beschafft, die in der Kaufbenachrichtigung enthalten ist, vergangene Klick-Information entsprechend zu einem Benutzer beschafft, der durch die letzte Klick-Information bezeichnet ist, wobei die vergangene Klick-Information zu Partner-Links in Beziehung steht, die zuvor angeklickt wurden, wenn ein Partner-Link als letztes angeklickt wurde, und die auf Basis der beschafften letzten Klick-Information und der beschafften vergangenen Klick-Situation eine Klick-Historie spezifiziert, die einen Klick auf Partner-Links durch den Käufer angibt, und
eine Bestimmungseinheit (14) zu implementieren, die auf Basis der Klick-Historie einen oder mehr Herausgeber zum Erhalten einer Partner-Gebühr von dem verkaufenden Shop und eine an jeden Herausgeber zu zahlende Partner-Gebühr bestimmt, wobei
die Bestimmungseinheit (14) den Herausgeber, der durch die letzte Klick-Information bezeichnet wird, als ersten Empfänger einer Partner-Gebühr von dem verkaufenden Shop bestimmt und, wenn der verbundene Shop, der durch die vergangene Klick-Information bezeichnet ist, und der verkaufende Shop der gleiche sind, den Herausgeber, der durch die vergangene Klick-Information bezeichnet wird, als zweiten Empfänger einer Partner-Gebühr von dem verkaufenden Shop bestimmt, und
die Bestimmungseinheit (14) die letzte Klick-Information durch Klären des HTTP-Cookies löscht und die vergangene Klick-Information entsprechend dem zweiten Empfänger aus der Datenbank (22) nach Bestimmen eines oder mehrerer Herausgeber zum Empfangen einer Partner-Gebühr von dem verkaufenden Shop und einer Partner-Gebühr löscht, die an jeden Herausgeber zu zahlen ist.

## Revendications

1. Dispositif de gestion d'affiliés (10) comprenant :
une unité de surveillance d'accès (11) qui, en fonction d'un clic d'un utilisateur sur un lien affilié, reçoit une requête HTTP comprenant un cookie HTTP contenant un éditeur du lien affilié, une boutique liée à partir du lien affilié et un identifiant d'historique de l'utilisateur à partir d'un terminal utilisateur (40), stocke des informations de clic passées générées sur la base du cookie HTTP dans une base de données (22), et transmet la requête HTTP à un serveur (30) pour amener le serveur (30) à générer une page web en fonction de la requête HTTP et transmettre la page web au terminal utilisateur (40), le cookie HTTP contenant seulement une dernière information de clic relative à un lien affilié cliqué en dernier, l'unité de surveillance d'accès (11) écrasant une autre information de clic avec une nouvelle information de clic quand l'une autre information de clic correspondant à une boutique liée et un utilisateur indiqué par la nouvelle information de clic à stocker dans la base de données (22) est déjà stockée dans la base de données (22) ;
une unité d'acquisition (12) qui acquiert une notification d'achat contenant des informations d'achat indiquant un acheteur d'un article et une boutique de vente de l'article et le cookie HTTP, à partir du serveur (30) ;
une unité de spécification (13) qui acquiert la dernière information de clic à partir du cookie HTTP contenu dans la notification d'achat, acquiert des informations de clic passées correspondant à un utilisateur indiqué par la dernière information de clic, les informations de clic passées concernant des liens affiliés cliqués avant quand un lien affilié est cliqué en dernier, et spécifie un historique de clic indiquant le clic sur des liens affiliés par l'acheteur sur la base de la dernière information de clic acquise et des informations de clic passées acquises ; et
une unité de détermination (14) qui détermine un ou plusieurs éditeurs pour recevoir une rémunération d'affilié de la part de la boutique de vente et une rémunération d'affilié à payer à chaque éditeur sur la base de l'historique de clic, dans lequel
l'unité de détermination (14) détermine l'éditeur indiqué par la dernière information de clic comme un premier bénéficiaire d'une rémunération d'affilié de la part de la boutique de vente et, quand la boutique liée indiquée par les informations de clic passées et la boutique de vente sont les mêmes, détermine l'éditeur indiqué par les informations de clic passées comme un deuxième bénéficiaire d'une rémunération d'affilié de la part de la boutique de vente, et
l'unité de détermination (14) supprime la dernière information de clic en effaçant le cookie HTTP et supprime les informations de clic passées correspondant au deuxième bénéficiaire de la base de données (22) après la détermination d'un ou plusieurs éditeurs pour recevoir une rémunération d'affilié de la part de la boutique de vente et une rémunération d'affilié à payer à chaque éditeur.

2. Dispositif de gestion d'affiliés (10) selon la revendication 1, dans lequel
quand l'acheteur achète un premier article à partir d'une première boutique de vente et achète ensuite un deuxième article à partir d'une deuxième boutique de vente, l'unité de détermination (14) détermine les premier et deuxième bénéficiaires d'une rémunération d'affilié de la part de la première boutique de vente et détermine ensuite un autre bénéficiaire d'une rémunération d'affilié de la part de la deuxième boutique de vente sur la base des informations de clic passées dans l'historique de clic restant après que la dernière information de clic et les informations de clic passées correspondant au deuxième bénéficiaire ont été supprimées.

3. Dispositif de gestion d'affiliés (10) selon la revendication 2, dans lequel
la boutique liée comprend une boutique de type 1 et une boutique de type 2,
un taux de type 1 utilisé pour le calcul d'une rémunération d'affilié au premier bénéficiaire est fixé pour la boutique de type 1,
le taux de type 1 et un taux de type 2 utilisé pour le calcul d'une rémunération d'affilié additionnelle au premier bénéficiaire ou d'une rémunération d'affilié au deuxième bénéficiaire sont fixés pour la boutique de type 2, et
l'unité de détermination (14) ne détermine pas un autre bénéficiaire d'une rémunération d'affilié de la part de la deuxième boutique de vente quand la deuxième boutique de vente est la boutique de type 1, et détermine un autre bénéficiaire d'une rémunération d'affilié de la part de la deuxième boutique de vente quand la deuxième boutique de vente est la boutique de type 2.

4. Procédé de gestion d'affiliés exécuté par un dispositif de gestion d'affiliés (10), le procédé comprenant :
une étape de surveillance d'accès pour, en fonction d'un clic d'un utilisateur sur un lien affilié, recevoir une requête HTTP comprenant un cookie HTTP contenant un éditeur du lien affilié, une boutique liée à partir du lien affilié et un identifiant d'historique de l'utilisateur à partir d'un terminal utilisateur (40), stocker des informations de clic passées générées sur la base du cookie HTTP dans une base de données (22), et transmettre la requête HTTP à un serveur (30) pour amener le serveur (30) à générer une page web en fonction de la requête HTTP et transmettre la page web au terminal utilisateur (40), le cookie HTTP contenant seulement une dernière information de clic relative à un lien affilié cliqué en dernier, l'étape de surveillance d'accès écrasant une autre information de clic avec une nouvelle information de clic quand l'une autre information de clic correspondant à une boutique liée et un utilisateur indiqué par la nouvelle information de clic à stocker dans la base de données (22) est déjà stockée dans la base de données (22) ;
une étape d'acquisition pour acquérir une notification d'achat contenant des informations d'achat indiquant un acheteur d'un article et une boutique de vente de l'article et le cookie HTTP, à partir du serveur (30) ;
une étape de spécification pour acquérir la dernière information de clic à partir du cookie HTTP contenu dans la notification d'achat, acquérir les informations de clic passées correspondant à un utilisateur indiqué par la dernière information de clic, les informations de clic passées concernant des liens affiliés cliqués avant quand un lien affilié est cliqué en dernier, et spécifier un historique de clic indiquant le clic sur des liens affiliés par l'acheteur sur la base de la dernière information de clic acquise et des informations de clic passées acquises ; et
une étape de détermination pour déterminer un ou plusieurs éditeurs pour recevoir une rémunération d'affilié de la part de la boutique de vente et une rémunération d'affilié à payer à chaque éditeur sur la base de l'historique de clic, dans lequel
l'étape de détermination détermine l'éditeur indiqué par la dernière information de clic comme un premier bénéficiaire d'une rémunération d'affilié de la part de la boutique de vente et, quand la boutique liée indiquée par les informations de clic passées et la boutique de vente sont les mêmes, détermine l'éditeur indiqué par les informations de clic passées comme un deuxième bénéficiaire d'une rémunération d'affilié de la part de la boutique de vente, et
l'étape de détermination supprime la dernière information de clic en effaçant le cookie HTTP et supprime les informations de clic passées correspondant au deuxième bénéficiaire de la base de données (22) après la détermination d'un ou plusieurs éditeurs pour recevoir une rémunération d'affilié de la part de la boutique de vente et une rémunération d'affilié à payer à chaque éditeur.

5. Programme de gestion d'affiliés amenant un ordinateur (10) à mettre en oeuvre :
une unité de surveillance d'accès (11) qui, en fonction d'un clic d'un utilisateur sur un lien affilié, reçoit une requête HTTP comprenant un cookie HTTP contenant un éditeur du lien affilié, une boutique liée à partir du lien affilié et un identifiant d'historique de l'utilisateur à partir d'un terminal utilisateur (40), stocke des informations de clic passées générées sur la base du cookie HTTP dans une base de données (22), et transmet la requête HTTP à un serveur (30) pour amener le serveur (30) à générer une page web en fonction de la requête HTTP et transmettre la page web au terminal utilisateur (40), le cookie HTTP contenant seulement une dernière information de clic relative à un lien affilié cliqué en dernier, l'unité de surveillance d'accès (11) écrasant une autre information de clic avec une nouvelle information de clic quand l'une autre information de clic correspondant à une boutique liée et un utilisateur indiqué par la nouvelle information de clic à stocker dans la base de données (22) est déjà stockée dans la base de données (22) ;
une unité d'acquisition (12) qui acquiert une notification d'achat contenant des informations d'achat indiquant un acheteur d'un article et une boutique de vente de l'article et le cookie HTTP, à partir du serveur (30) ;
une unité de spécification (13) qui acquiert la dernière information de clic à partir du cookie HTTP contenu dans la notification d'achat, acquiert les informations de clic passées correspondant à un utilisateur indiqué par la dernière information de clic, les informations de clic passées concernant des liens affiliés cliqués avant quand un lien affilié est cliqué en dernier, et spécifie un historique de clic indiquant le clic sur des liens affiliés par l'acheteur sur la base de la dernière information de clic acquise et des informations de clic passées acquises ; et
une unité de détermination (14) qui détermine un ou plusieurs éditeurs pour recevoir une rémunération d'affilié de la part de la boutique de vente et une rémunération d'affilié à payer à chaque éditeur sur la base de l'historique de clic, dans lequel
l'unité de détermination (14) détermine l'éditeur indiqué par la dernière information de clic comme un premier bénéficiaire d'une rémunération d'affilié de la part de la boutique de vente et, quand la boutique liée indiquée par les informations de clic passées et la boutique de vente sont les mêmes, détermine l'éditeur indiqué par les informations de clic passées comme un deuxième bénéficiaire d'une rémunération d'affilié de la part de la boutique de vente, et
l'unité de détermination (14) supprime la dernière information de clic en effaçant le cookie HTTP et supprime les informations de clic passées correspondant au deuxième bénéficiaire de la base de données (22) après la détermination d'un ou plusieurs éditeurs pour recevoir une rémunération d'affilié de la part de la boutique de vente et une rémunération d'affilié à payer à chaque éditeur.

6. Support d'enregistrement lisible par ordinateur stockant un programme de gestion d'affiliés amenant un ordinateur (10) à mettre en oeuvre :
une unité de surveillance d'accès (11) qui, en fonction d'un clic d'un utilisateur sur un lien affilié, reçoit une requête HTTP comprenant un cookie HTTP contenant un éditeur du lien affilié, une boutique liée à partir du lien affilié et un identifiant d'historique de l'utilisateur à partir d'un terminal utilisateur (40), stocke des informations de clic passées générées sur la base du cookie HTTP dans une base de données (22), et transmet la requête HTTP à un serveur (30) pour amener le serveur (30) à générer une page web en fonction de la requête HTTP et transmettre la page web au terminal utilisateur (40), le cookie HTTP contenant seulement une dernière information de clic relative à un lien affilié cliqué en dernier, l'unité de surveillance d'accès (11) écrasant une autre information de clic avec une nouvelle information de clic quand l'une autre information de clic correspondant à une boutique liée et un utilisateur indiqué par la nouvelle information de clic à stocker dans la base de données (22) est déjà stockée dans la base de données (22) ;
une unité d'acquisition (12) qui acquiert une notification d'achat contenant des informations d'achat indiquant un acheteur d'un article et une boutique de vente de l'article et le cookie HTTP, à partir du serveur (30) ;
une unité de spécification (13) qui acquiert la dernière information de clic à partir du cookie HTTP contenu dans la notification d'achat, acquiert les informations de clic passées correspondant à un utilisateur indiqué par la dernière information de clic, les informations de clic passées concernant des liens affiliés cliqués avant quand un lien affilié est cliqué en dernier, et spécifie un historique de clic indiquant le clic sur des liens affiliés par l'acheteur sur la base de la dernière information de clic acquise et des informations de clic passées acquises ; et
une unité de détermination (14) qui détermine un ou plusieurs éditeurs pour recevoir une rémunération d'affilié de la part de la boutique de vente et une rémunération d'affilié à payer à chaque éditeur sur la base de l'historique de clic, dans lequel
l'unité de détermination (14) détermine l'éditeur indiqué par la dernière information de clic comme un premier bénéficiaire d'une rémunération d'affilié de la part de la boutique de vente et, quand la boutique liée indiquée par les informations de clic passées et la boutique de vente sont les mêmes, détermine l'éditeur indiqué par les informations de clic passées comme un deuxième bénéficiaire d'une rémunération d'affilié de la part de la boutique de vente, et
l'unité de détermination (14) supprime la dernière information de clic en effaçant le cookie HTTP et supprime les informations de clic passées correspondant au deuxième bénéficiaire de la base de données (22) après la détermination d'un ou plusieurs éditeurs pour recevoir une rémunération d'affilié de la part de la boutique de vente et une rémunération d'affilié à payer à chaque éditeur.
